# EUROPÄISCHE PATENTANMELDUNG

(11) **EP 4 793 791 A1**
(43) Veröffentlichungstag der Anmeldung: **19.08.2026**
(21) Anmeldenummer: 26152837.6
(22) Anmeldetag: 20.01.2026
(51) Int. Cl.: G06F 16/25, G06F 40/30, G06Q 50/18

(54) **VERFAHREN UND EINE VORRICHTUNG ZUM REGISTRIEREN EINER KENNZEICHNUNG**

(30) Priorität: 13.02.2025 DE 102025105332
(71) Anmelder: FORBENCAP GmbH, 87527 Sonthofen (DE)
(72) Erfinder: Götz, Stefan, 85659 Forstern (DE)
(74) Vertreter: advotec.

(57) **Zusammenfassung**

Vorgeschlagen wird ein Verfahren zum automatisierten Registrieren einer Kennzeichnung (104), ausweisend: Bereitstellen (S1) von kennzeichnungsbezogenen Informationen (106) an einen ersten Sprachmodell-Agenten (108), der die Registrierung der Kennzeichnung (104) in einer Datenbank (110) durchführt; Überwachen (S2) eines Registrierungsfortschritts der Kennzeichnung (104) durch den ersten Sprachmodell-Agenten (108) durch Abfragen von Statusinformationen (112); und wenn die Statusinformationen (112) angeben, dass die Kennzeichnung (104) einen registrierungserheblichen Mangel aufweist, Bereitstellen (S3) der Statusinformationen (112) an einen zweiten Sprachmodell-Agenten (114), der den Mangel adressiert, und an den ersten Sprachmodell-Agenten (108) zum Registrieren der Kennzeichnung (104) in der Datenbank (110) übergibt.

## Beschreibung

Die Erfindung betrifft ein Verfahren und eine Vorrichtung zum automatisierten Registrieren einer Kennzeichnung. Ferner betrifft die Erfindung ein Computerprogrammprodukt und ein computerspeicherbares Medium.

### Stand der Technik

Die Registrierung von Schutzrechten wie Marken oder Designs ist in vielen Rechtsordnungen ein mehrstufiger Prozess, der von der Einreichung der relevanten Unterlagen über eine formale Prüfung und Recherche bis hin zur finalen Erteilung oder Eintragung reicht. Üblicherweise beginnt der Anmelder mit der Erstellung einer Anmeldung, welche die jeweilige Kennzeichnung beschreibt. Diese Anmeldung wird anschließend bei der zuständigen Behörde, beispielsweise einem Patent- und Markenamt, eingereicht. Im weiteren Verlauf führt die Behörde zunächst eine formale Prüfung durch, in der die eingereichten Dokumente auf Vollständigkeit und Einhaltung der formalen Anforderungen überprüft werden.

Erst wenn diese erste Prüfung erfolgreich durchlaufen ist, erfolgt eine inhaltliche Prüfung, die unter anderem umfasst, ob es bereits identische oder verwechslungsfähige ältere Schutzrechte gibt. Bei unklarer Rechtslage oder offensichtlichen Konflikten kann ein Austausch zwischen dem Anmelder und der Behörde stattfinden, etwa in Form amtlicher Beanstandungen oder Bescheide. Diese müssen in der Regel innerhalb vorgegebener Fristen beantwortet werden. Gegebenenfalls werden seitens der Behörde Nachweise, Erläuterungen oder Änderungen der Anmeldung gefordert.

In der Praxis stellt der gesamte Ablauf eine zeit- und ressourcenintensive Abfolge von Schritten dar. Trotz verfügbarer elektronischer Anmeldesysteme sind vielfach manuelle Bearbeitungsschritte sowie umfangreiche wiederkehrende Rechts- und Ähnlichkeitsprüfungen erforderlich. Während größere Unternehmen sich diesbezüglich häufig auf spezialisierte Abteilungen oder externe Kanzleien stützen können, entsteht für kleine und mittlere Unternehmen sowie Einzelerfinder ein hoher administrativer und finanzieller Aufwand.

Hinzu kommt, dass die Behörde bei formalen oder materiellen Mängeln teils mehrstufige Beanstandungs- und Korrekturverfahren eröffnet, was in Kombination mit gegebenenfalls vorhandenen Widerspruchs- oder Einspruchsprozessen zu weiteren zeitlichen Verzögerungen führen kann. Darüber hinaus sind Wiederholungen derselben Prüfungsschritte - zum Beispiel bei vergleichbaren Sachverhalten - nicht selten, was zusätzliche Reibungspunkte und Fehlerquellen birgt.

Aus diesen Umständen ergeben sich verschiedene Unzulänglichkeiten, die den Prozess komplex und anfällig für Verzögerungen gestalten. So mangelt es häufig an automatischen Mechanismen zur Datenauswertung, zur Unterstützung bei der Behebung von Beanstandungen oder zur effizienten Kommunikation mit den zuständigen Behörden. Der manuelle Aufwand führt nicht nur zu erheblichem Zeitbedarf, sondern auch zu einer erhöhten Fehlerrate bei der Eingabe oder Verarbeitung von Informationen.

Es ist eine Aufgabe der Erfindung, ein dahingehend verbessertes Verfahren und/oder eine verbesserte Vorrichtung zur Überwindung und/oder Vereinfachung von Registrierungsprozessen anzugeben.

### Offenbarung der Erfindung

Die Aufgabe wird gelöst durch ein Verfahren gemäß den Merkmalen des Patentanspruchs 1. Die Aufgabe wird gelöst durch eine Vorrichtung gemäß den Merkmalen des Patentanspruchs 10.

Demgemäß wird ein Verfahren zum automatisierten Registrieren einer Kennzeichnung vorgeschlagen, ausweisend: Bereitstellen von kennzeichnungsbezogenen Informationen an einen ersten Sprachmodell-Agenten, der die Registrierung der Kennzeichnung in einer Datenbank durchführt; Überwachen eines Registrierungsfortschritts der Kennzeichnung durch den ersten Sprachmodell-Agenten durch Abfragen von Statusinformationen; und
wenn die Statusinformationen angeben, dass die Kennzeichnung einen registrierungserheblichen Mangel aufweist, Bereitstellen der Statusinformationen an einen zweiten Sprachmodell-Agenten, der den Mangel, insbesondere unter Verwendung von automatischem, adaptiven Prompten und Domänenwissen, adressiert, und an den ersten Sprachmodell-Agenten zum, insbesondere erneuten, Registrieren bzw. zum berichtigten Registrieren bzw. zur Verbesserung der Registrierung der Kennzeichnung in der Datenbank übergibt.

Es versteht sich, dass die erfindungsgemäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Weiterhin wird eine Vorrichtung zum automatisierten Registrieren einer Kennzeichnung, die Vorrichtung ausweisend eine Recheneinrichtung, die dazu ausgebildet ist, die folgenden Schritte auszuführen: Bereitstellen von kennzeichnungsbezogenen Informationen an einen ersten Sprachmodell-Agenten, der die Registrierung der Kennzeichnung in einer Datenbank durchführt; Überwachen eines Registrierungsfortschritts der Kennzeichnung durch den ersten Sprachmodell-Agenten durch Abfragen von Statusinformationen; und wenn die Statusinformationen angeben, dass die Kennzeichnung einen registrierungserheblichen Mangel aufweist, Bereitstellen der Statusinformationen an einen zweiten Sprachmodell-Agenten, der den Mangel, insbesondere unter Verwendung von automatischem, adaptiven Prompten und/oder Domänenwissen, adressiert, und an den ersten Sprachmodell-Agenten zum, insbesondere erneuten, Registrieren bzw. zum berichtigten Registrieren bzw. zur Verbesserung der Registrierung der Kennzeichnung in der Datenbank übergibt.

Die für das Verfahren gemachten Ausführungen gelten für die Vorrichtung entsprechend. Dabei versteht es sich, dass sprachliche Abwandlungen von verfahrensmäßig formulierten Merkmalen nach sprachüblicher Praxis für die Vorrichtung umformulierbar sind, ohne dass derartige Formulierungen explizit hier aufgeführt werden müssen.

Unter dem Begriff Kennzeichnung ist vorliegend vorzugsweise eine Marke zu verstehen, insbesondere eine Wortmarke und/oder eine Bildmarke und/oder eine Wort-Bild-Marke und/oder eine dreidimensionale Marke und/oder eine Farbmarke und/oder eine Klangmarke und/oder eine Bewegungsmarke und/oder eine Hologrammmarke und/oder eine Mustermarke. Weiterhin ist unter dem Begriff Kennzeichnung vorzugsweise ein Design und/oder ein Patent und/oder ein Gebrauchsmuster zu verstehen. Ebenso umfasst der Begriff vorzugsweise eine geographische Herkunftsangabe und/oder eine geschützte Ursprungsbezeichnung. Ferner ist unter einer Kennzeichnung vorzugsweise ein Unternehmenskennzeichen, insbesondere ein Firmenname und/oder ein Handelsname, zu verstehen. Darüber hinaus umfasst der Begriff vorzugsweise eine Halbleitertopographie und/oder ein Sortenschutzrecht und/oder eine Verkehrskennzeichnung und/oder ein amtliches Prüfzeichen und/oder ein Verlagsrecht an Titeln von periodischen Druckwerken. Ferner kann unter dem Begriff Kennzeichnung auch eine Grundbuch-Kennzeichnung zu verstehen sein.

Das Verfahren betrifft das automatisierte Registrieren einer Kennzeichnung, wobei der Begriff der Kennzeichnung verschiedene Schutzrechte umfassen kann, insbesondere die Anmeldung einer Marke oder eines Designs. Darüber hinaus können auch andere Kennzeichnungen, beispielsweise Unternehmensnamen, geographische Herkunftsangaben oder geschützte Produktbezeichnungen, Gegenstand des Registrierungsprozesses sein. Die Automatisierung bezieht sich darauf, dass die einzelnen Prozessschritte, die typischerweise mit einer solchen Anmeldung verbunden sind, durch maschinelle Verfahren ohne direkten menschlichen Eingriff durchgeführt werden. Alternative Formulierungen für diesen Vorgang könnten "automatisierte Eintragung eines Schutzrechts", "digital unterstützte Anmeldung einer Kennzeichnung" oder "maschinelle Verarbeitung von Kennzeichnungsregistrierungen" sein.

Die kennzeichnungsbezogenen Informationen umfassen vorzugsweise Daten, die für die Anmeldung einer Kennzeichnung erforderlich oder relevant sind. Dazu zählen insbesondere textuelle Angaben, wie zum Beispiel die Bezeichnung der Marke oder Beschreibung eines Designs, und/oder graphische und/oder bildliche Darstellungen wie Logos oder grafische Gestaltungselemente. Darüber hinaus können auch weitere Datenformate in Betracht kommen, etwa Audiodateien, wenn es sich um eine akustische Marke handelt, oder Videodaten für bewegte Bildmarken oder Designvarianten. Alternativ könnten diese Informationen als "registrierungsbezogene Eingabedaten", "schutzrechtsrelevante Metadaten" oder "anmeldebezogene Dokumente" beschrieben werden.

Der erste Sprachmodell-Agent ist eine auf maschinellem Lernen basierende Einheit, die vorzugsweise für die Verarbeitung natürlicher Sprache optimiert ist und für die initiale Bearbeitung der Kennzeichnungsregistrierung zuständig ist. Er kann beispielsweise auf einem großen Sprachmodell basieren, das durch spezielle Trainingsdaten auf den Bereich der Schutzrechtsanmeldungen abgestimmt wurde. Seine Hauptaufgabe besteht vorzugsweise darin, die bereitgestellten kennzeichnungsbezogenen Informationen zu interpretieren, die Registrierung in einer Datenbank durchzuführen bzw. zu initiieren und/oder den weiteren Prozess zu überwachen. Dabei kann der erste Sprachmodell-Agent mit analytischen oder regelbasierten Methoden kombiniert werden, um eine höhere Präzision zu erzielen. Alternativ kann er als "primärer Verarbeitungsknoten", "initialer Registrierungsagent" oder "sprachmodellgestützter Erstprüfer" bezeichnet werden. Ferner kann der erste Sprachmodellagent auch als multimodales Modell ausgebildet sein.

Die Registrierung der Kennzeichnung in einer Datenbank wird vorzugsweise durch den ersten Sprachmodell-Agenten angestoßen, indem er die erforderlichen Eingabedaten strukturiert und in ein geeignetes Format überführt. Dies kann eine direkte Eintragung in eine zentrale Datenbank eines Marken- oder Patentamtes sein oder eine Vorverarbeitung der Daten für eine spätere Übermittlung. Dabei werden standardisierte Datenbanken, etwa amtliche Register und/oder unternehmensinterne Schutzrechtsverwaltungen, verwendet. Alternativ könnte dieser Vorgang als "automatische Erfassung in einem Schutzrechtsregister", "digitale Speicherung in einer Anmeldedatenbank" oder "softwaregestützte Dokumentation von Schutzrechtsanmeldungen" bezeichnet werden.

Der Registrierungsfortschritt bezeichnet vorzugsweise den aktuellen Status der Anmeldung innerhalb des Registrierungsprozesses. Er kann verschiedene Bearbeitungsphasen umfassen, darunter die formale Prüfung, die inhaltliche Prüfung, die Veröffentlichung der Anmeldung und/oder gegebenenfalls die Entscheidung über die Eintragung. Der Fortschritt wird vorzugsweise durch regelmäßige Statusaktualisierungen erfasst und durch den ersten Sprachmodell-Agenten überwacht und/oder ausgewertet. Alternativ könnte dieser Begriff als "Bearbeitungsstand der Schutzrechtsanmeldung", "Fortschrittsstufe des Registrierungsverfahrens" oder "aktueller Anmeldestatus" beschrieben werden.

Die Statusinformationen umfassen vorzugsweise Daten, die den aktuellen Stand der Anmeldung betreffen. Dazu gehören unter anderem Rückmeldungen der zuständigen Behörde, Hinweise auf erforderliche Ergänzungen und/oder Fehler sowie eine Einstufung der Anmeldung hinsichtlich formaler oder materieller Anforderungen. Die Statusinformationen können vorzugsweise von der Registrierungsbehörde bereitgestellt und/oder durch den ersten Sprachmodell-Agenten aus verschiedenen Quellen extrahiert werden. Alternative Bezeichnungen wären "Verfahrensstandsdaten", "prozessbezogene Rückmeldungen" oder "aktueller Bearbeitungsstatus".

Ein registrierungserheblicher Mangel bezeichnet vorzugsweise eine Unstimmigkeit oder einen Fehler innerhalb der Anmeldung, der eine erfolgreiche Registrierung verhindert oder erschwert. Dies kann sich auf formale Aspekte, etwa fehlende Angaben und/oder unzulässige Zeichen, und/oder auf materielle Kriterien, beispielsweise Verwechslungsgefahr mit einer älteren Kennzeichnung, beziehen. Solche Mängel können durch die zuständige Behörde festgestellt und/oder durch eine automatische Prüfung erkannt werden. Ferner kann ein solcher Mangel auch von einer Externen Partei aufgezeigt werden. Alternativ kann dieser Begriff als "eintragungshindernder Fehler", "prüfungsrelevante Beanstandung" oder "schutzrechtsbezogene Unstimmigkeit" beschrieben werden.

Der zweite Sprachmodell-Agent ist vorzugsweise eine weitere maschinelle Einheit, die für die Bearbeitung und Behebung registrierungserheblicher Mängel zuständig ist. Er greift vorzugsweise auf spezialisierte Verfahren zurück, um mögliche Lösungen zu generieren und eine Anpassung der Anmeldung vorzunehmen. Dabei kann der zweite Sprachmodell-Agent auch mit weiteren Modellen interagieren, um auf Basis von Vorschriften und/oder Fallbeispielen eine optimierte Bearbeitungsstrategie zu entwickeln. Alternativ könnte er als "sekundärer Korrekturagent", "sprachmodellgestützter Prüfassistent" oder "automatisierter Mängelbehebungsagent" bezeichnet werden.

Der erste und/oder zweite Sprachmodell-Agent kann vorzugsweise als multimodales Modell ausgebildet sein, um verschiedene Arten von Eingabedaten effizient zu verarbeiten. Dies bedeutet, dass die Sprachmodell-Agenten vorzugsweise nicht nur auf rein textbasierte Eingaben beschränkt sind, sondern auch Bild-, Audio- oder Videodaten analysieren und interpretieren können. Zu diesem Zweck können sie vorzugsweise auf Transformermodellen, wie beispielsweise großen Sprachmodellen oder multimodalen Varianten wie CLIP oder Flamingo, die Text und Bilder gemeinsam verarbeiten, oder anderen Attention-Modellen basieren. Darüber hinaus kann der zweite Sprachmodell-Agent vorzugsweise Convolutional Neural Networks (CNNs) oder hybride Architekturen verwenden, um visuelle Kennzeichnungen, wie Logos oder Designmerkmale, zu analysieren und mögliche Ähnlichkeiten mit bereits registrierten Schutzrechten zu erkennen. Alternativ kann das Modell vorzugsweise auch auf rekurrenten neuronalen Netzen (RNNs) oder Long-Short-Term-Memory-(LSTM)-Netzwerken basieren, um sequentielle Daten wie Audiosequenzen in der Registrierung von Klangmarken zu verarbeiten. Weiterhin kann der erste Sprachmodell-Agent vorzugsweise eine Graph Neural Network (GNN)-Architektur verwenden, um Beziehungen zwischen verschiedenen Schutzrechten oder strukturierten Datenbanken effizient zu analysieren. Zusätzlich können beide Agenten vorzugsweise durch hybride Modelle, die regelbasierte und maschinell lernende Verfahren kombinieren, ergänzt werden, um eine höhere Robustheit und Flexibilität bei der Registrierung und Fehlerbehebung zu gewährleisten.

Das System kann eine technische Architektur aufweisen, in welcher der erste Sprachmodell-Agent (Agent 1) und der zweite Sprachmodell-Agent (Agent 2) in separaten Rechenmodulen betrieben werden. Die Architektur kann einen ereignisgesteuerten Message-Bus umfassen, der beispielsweise als internes MQ-System oder als Streaming-Plattform (etwa Apache Kafka) ausgebildet sein kann. Über diesen Message-Bus können die Agenten strukturierte Nachrichten austauschen, die ein Status-Flag, eine Fehlerklasse und einen serialisierten Payload enthalten können. Der Message-Bus kann derart ausgebildet sein, dass Nachrichten persistent gespeichert werden, wodurch eine fortlaufende Kommunikation selbst bei temporären Ausfällen eines Agenten möglich sein kann. Die Agenten können in voneinander getrennten Containern oder virtuellen Recheneinheiten ausgeführt werden, wobei der erste Agent auf eine Datenbank-Abstraktionsschicht zugreifen kann, die einen Transaktionsmanager umfassen kann, um Datenkonsistenz zu gewährleisten. Der zweite Agent kann hingegen auf einem eigenen GPU-Ressourcenpool ausgeführt sein.

Der zweite Sprachmodell-Agent (Agent 2) kann eine Prompt-Engine aufweisen, die zur automatischen und adaptiven Anpassung von Eingabeaufforderungen ausgebildet sein kann. Die Prompt-Engine kann Parameter wie Temperatur, Token-Fenster, semantische Filter, Prioritätsfaktoren, Antwortlatenzen oder Domänengewichte dynamisch anpassen. Die Parameteranpassung kann durch eine Scoring-Funktion gesteuert werden, die aus vorherigen Modellantworten ermittelt werden kann. Die Scoring-Funktion kann technische Metriken berücksichtigen, wie beispielsweise syntaktische Validität, Datenbank-Kompatibilitätsanforderungen oder Antwortlatenzen. Dadurch kann die Prompt-Engine als regelbasierter oder lernbasierter Controller wirken, der eine technische Optimierung der Modellinteraktion ermöglicht.

Das System kann eine Fehlerklassifikationskomponente aufweisen, die registrierungserhebliche Mängel in definierte Fehlerzustände überführen kann. Die Klassifikation kann anhand eines deterministischen endlichen Zustandsautomaten vorgenommen sein, der Fehlern jeweils eine Fehlerklasse zuordnen kann (z. B. E1 für Syntaxfehler, E2 für fehlende Pflichtangaben, E3 für Schema-Konflikte, E4 für semantische Konflikte). Die Zuordnung kann von Agent 1 durchgeführt werden, wodurch Agent 2 strukturierte Informationen erhalten kann, die eine gezielte Auswahl technischer Korrekturstrategien ermöglichen können. Hierdurch kann eine reproduzierbare und konsistente Fehlerbehandlung erzeugt werden.

Das System kann einen Mechanismus zur Vermeidung von Deadlocks aufweisen. Insbesondere kann ein Token-Verfahren eingesetzt sein, bei dem Agent 1 einen zeitstempelbasierten Token erzeugen kann, der dem zweiten Agenten nur während einer festgelegten Gültigkeitsdauer (TTL) Zugriff auf einen bestimmten Datenbankeintrag erlaubt. Agent 2 kann Korrekturen nur dann zurückspielen, wenn ein gültiger Token vorliegt. Dadurch kann eine Konsistenz der Datenbankzugriffe auch in parallel betriebenen Registrierungsprozessen gewährleistet sein. Die Architektur kann zudem Redundanzmechanismen oder Wiederholungsstrategien umfassen, um Systemstabilität zu erhöhen.

Der Ablauf einer iterativen Korrekturschleife kann wie folgt ausgestaltet sein: Agent 1 kann CheckStatus() ausführen und Statusinformationen erhalten. Die Statusinformationen können durch ein Parser-Modul in ein normiertes Datenobjekt überführt werden. Ein Zustandsautomat kann den Fehler klassifizieren. Der Message-Bus kann ein strukturiertes Datenpaket an Agent 2 übermitteln. Agent 2 kann AdaptivePromptCycle() ausführen. Eine Validierungseinheit kann die erzeugten Ausgaben überprüfen. Agent 1 kann gültige Ergebnisse übernehmen. Die Datenbank kann über einen Transaktionsmanager aktualisiert werden. Die Schritte können wiederholt werden, bis ein fehlerfreier Zustand erreicht ist. Dieser Ablauf kann als regelbasierter, maschineller oder hybrider Algorithmus implementiert sein.

Durch die vorliegend vorgeschlagene Architektur kann ein technischer Effekt erzielt werden. Dieser technische Effekt kann insbesondere eine Erhöhung der Systemstabilität umfassen, da Fehlerklassen deterministisch verarbeitet werden können, während adaptive Prompt-Mechanismen die Konsistenz der Interaktion zwischen Agent 1 und Agent 2 verbessern können. Ferner kann ein technischer Effekt in einer Verringerung der Latenzschwankungen bei der Kommunikation und in einer Reduktion von Wiederholungsoperationen bestehen. Zusätzlich kann die Konsistenz der Datenbanktransaktionen erhöht sein, was zu einer verbesserten Gesamtrobustheit des Rechensystems führen kann.

Besonders bevorzugt kann das System ein computerimplementiertes Verfahren zum automatisierten Registrieren einer Kennzeichnung aufweisen, das mehrere kooperierende technische Module umfasst. Das Verfahren kann insbesondere die Interaktion zweier spezialisierter Sprachmodell-Agenten vorsehen, die in voneinander getrennten Recheneinheiten ausgeführt sein können. Das Verfahren kann das Bereitstellen von kennzeichnungsbezogenen Informationen an einen ersten Sprachmodell-Agenten umfassen, der in einer ersten Recheneinheit ausgeführt sein und über eine Datenbank-Abstraktionsschicht auf eine Datenbank zugreifen kann. Der erste Sprachmodell-Agent kann den Registrierungsfortschritt der Kennzeichnung durch periodisches oder ereignisgesteuertes Abfragen von Statusinformationen überwachen. Das Verfahren kann vorsehen, dass der erste Sprachmodell-Agent Statusinformationen in ein strukturiertes Datenobjekt überführt, das eine Fehlerklasse, einen Kontextabschnitt sowie technische Metadaten umfassen kann. Das System kann hierzu eine Fehlerklassifikationskomponente aufweisen, die als deterministischer endlicher Zustandsautomat ausgebildet sein kann und die Statusinformationen einer vordefinierten Fehlerklasse zuordnet. Wenn die Statusinformationen anzeigen, dass ein registrierungserheblicher Mangel vorliegt, kann das strukturierte Datenobjekt über einen technischen Kommunikationskanal, der als Message-Bus oder Messaging-Queue ausgebildet sein kann, an einen zweiten Sprachmodell-Agenten übertragen werden. Die Übertragung kann paketorientiert erfolgen und Zustandsinformationen, Zeitstempel sowie Konsistenzmarker umfassen. Der zweite Sprachmodell-Agent kann in einer zweiten Recheneinheit ausgeführt sein und eine adaptive Prompt-Engine aufweisen. Diese Prompt-Engine kann zur dynamischen Anpassung von Prompt Parametern ausgebildet sein, wobei Parameter wie Temperatur, Prioritätsgewichte, semantische Filter oder Antwort Latenzen in Abhängigkeit von einer Scoring-Funktion modifiziert werden können. Die Scoring-Funktion kann technische Metriken berücksichtigen, wie syntaktische Validität, Kompatibilität mit der Datenbankstruktur, Ausführungszeiten oder Latenzspitzen. Der zweite Sprachmodell-Agent kann anhand der Fehlerklasse und der technischen Parameter eine Korrekturstrategie generieren und ein Korrekturergebnis erzeugen, das in einem strukturierten Ausgabedatenobjekt ausgegeben werden kann. Dieses Objekt kann wiederum über den Message-Bus an den ersten Sprachmodell-Agenten übertragen werden. Der erste Sprachmodell-Agent kann die Korrekturausgabe validieren. Die Validierung kann ein syntaktisches Prüfmodul, Konsistenzprüfungen, Schema-Validierungen oder Latenz-Constraints umfassen. Bei Bestehen der Validierung kann der erste Sprachmodell-Agent die Datenbank über einen Transaktionsmanager aktualisieren, der zur Sicherstellung serialisierbarer Transaktionsausführung ausgebildet sein kann. Das Verfahren kann ferner einen Mechanismus zur Deadlock-Vermeidung aufweisen. Dieser Mechanismus kann eine tokenbasierte Zugriffskontrolle umfassen, bei der der zweite Sprachmodell-Agent nur dann Korrekturen in den Datenbankprozess einspielen kann, wenn ein vom ersten Sprachmodell-Agent ausgestelltes, gültiges Token vorliegt. Die Schritte des Verfahrens können iterativ oder rekursiv ausgeführt werden, bis die Statusinformationen anzeigen, dass kein registrierungserheblicher Mangel mehr vorliegt. Das System kann außerdem eine Überwachungseinheit aufweisen, die technische Leistungsparameter wie Antwortzeiten, Durchsatz oder Fehlerraten erfasst, wodurch eine adaptive Stabilisierung der Verarbeitungslast möglich sein kann.

Weiterhin wird vorgeschlagen, dass das computerimplementierte Verfahren zum automatisierten Registrieren einer Kennzeichnung auch zum technischen Steuern einer verteilten Rechenarchitektur ausgebildet ist. Dabei kann eine erste Recheneinheit und eine zweite Recheneinheit vorgesehen sein, wobei jede Recheneinheit einen jeweils getrennt ausgeführten Sprachmodell-Agenten aufweist, und wobei die Recheneinheiten über eine Message-orientierte Middleware gekoppelt sind, dadurch gekennzeichnet, dass das Verfahren umfasst: Erfassen eines ersten Systemzustands in der ersten Recheneinheit durch Ausführen eines ersten Sprachmodell-Agenten, wobei der erste Sprachmodell-Agent die Konsistenz eines Eintragungsdatensatzes in einer Datenbank überwacht und hierzu strukturierte Statusdaten aus einer Datenbank-Abstraktionsschicht abruft, Umwandeln der Statusdaten in ein normiertes Zustandsobjekt durch ein Parsing-Modul der ersten Recheneinheit, wobei das Zustandsobjekt eine technische Fehlerklasse, Metadaten zur Datenbanksperre, Zeitstempel und Prozesskontextdaten umfasst, Übermitteln des Zustandsobjekts an die zweite Recheneinheit über die Message-orientierte Middleware, wobei das Zustandsobjekt unter Zuordnung eines Prioritätswerts in eine Nachrichtenwarteschlange eingestellt wird, technisches Analysieren der Fehlerklasse durch den zweiten Sprachmodell-Agenten und Anpassen einer Menge von Prompt-Parametern einer adaptiven Prompt-Engine der zweiten Recheneinheit, wobei die Prompt-Engine mindestens einen der Parameter Temperatur, semantische Filter, Antwortlatenz-Obergrenze, Token-Fenstergröße oder Modell-Ressourcenpriorität in Abhängigkeit einer Scoring-Funktion variiert, Erzeugen eines Korrekturobjekts durch den zweiten Sprachmodell-Agenten auf Basis der modifizierten Prompt-Parameter, wobei das Korrekturobjekt in ein strukturiertes Nachrichtenformat serialisiert wird, Zurückübermitteln des Korrekturobjekts an die erste Recheneinheit, wobei ein tokenbasierter Deadlock-Vermeidungsmechanismus sicherstellt, dass das Korrekturobjekt nur bei gültiger Schreibberechtigung übernommen wird, Validieren des Korrekturobjekts durch ein Validierungsmodul der ersten Recheneinheit, wobei syntaktische Konsistenz, Datenbank-Schema-Kompatibilität und Latenzanforderungen geprüft werden, Durchführen einer transaktionalen Aktualisierung der Datenbank mittels eines Transaktionsmanagers der ersten Recheneinheit, sofern das Korrekturobjekt gültig ist, und iteratives Wiederholen der Schritte 1-8, bis ein stabiler konsistenter Systemzustand erreicht ist, wobei das Verfahren bewirkt, dass Konflikte und Inkonsistenzen bei parallelen Zugriffen mehrerer KI-basierter Agenten auf eine gemeinsame Datenbank vermieden oder reduziert werden und dass die Latenz und Fehlerquote der verteilten KI-Prozessierung stabilisiert wird.

Das System kann eine verteilte Rechenarchitektur aufweisen, die mehrere voneinander getrennte Recheneinheiten umfasst. Jede Recheneinheit kann einen eigenständig ausführbaren Sprachmodell-Agenten umfassen. Die Recheneinheiten können in separaten Containern, virtuellen Maschinen oder physischen Servern betrieben werden und können über ein Netzwerk kommunizieren.

Die Kommunikation zwischen den Recheneinheiten kann mittels einer message-orientierten Middleware erfolgen. Die Middleware kann Nachrichten persistent speichern, priorisieren, in Warteschlangen einordnen und an die jeweils zuständige Recheneinheit weiterleiten.

Das System kann ein Parsing-Modul aufweisen, das eingehende Statusdaten in ein normiertes Zustandsobjekt überführt. Das Zustandsobjekt kann technische Parameter wie Zeitstempel, Fehlerklassen, Prozesskontextdaten, Metadaten zur Datenbanksperre und Prioritätswerte umfassen.

Die Systemarchitektur kann einen deterministischen endlichen Zustandsautomaten umfassen, der Statusdaten analysiert und einer vordefinierten Fehlerklasse zuordnet. Die Fehlerklasse kann zur Auswahl spezifischer Korrekturstrategien durch den zweiten Sprachmodell-Agenten dienen.

Die zweite Recheneinheit kann eine adaptive Prompt-Engine umfassen. Diese Prompt-Engine kann Parameter wie Temperatur, Token-Fenster, semantische Filter, Prioritätsgewichtungen und maximale Antwortlatenzen dynamisch anpassen.

Die Anpassung der Parameter kann durch eine Scoring-Funktion gesteuert werden, die syntaktische Qualität, Ausführungszeiten, Datenbankkompatibilität oder semantische Konsistenz bewertet.

Zur Vermeidung von Konflikten bei parallelen Schreibzugriffen kann ein tokenbasiertes Zugriffsverfahren eingesetzt sein. Das Token kann eine zeitliche Gültigkeit aufweisen und Schreibrechte auf bestimmte Datenbankbereiche steuern.

Die erste Recheneinheit kann ein Validierungsmodul umfassen, das Ausgaben des zweiten Sprachmodell-Agenten anhand syntaktischer Kriterien, Datenbankschemata, Konsistenzanforderungen und Latenzgrenzen prüft.

Die Datenbank kann über einen Transaktionsmanager aktualisiert werden, der eine serialisierbare Ausführung von Schreiboperationen gewährleistet.

Das gesamte Verfahren kann iterativ ausgeführt sein, wobei Fehlererkennung, Korrektur und Validierung wiederholt durchgeführt werden, bis ein stabiler Systemzustand erreicht ist.

Durch die modulare Architektur und die technische Koordination der Agenten kann das System eine erhöhte Robustheit, geringere Latenzschwankungen, verbesserte Konsistenz der Datenbankzugriffe und eine Reduktion von Konflikten zwischen parallel ausgeführten Rechenprozessen aufweisen.

Das automatische, adaptive Prompten beschreibt vorzugsweise die dynamische Anpassung von Eingabeaufforderungen und/oder Steuerbefehlen für den zweiten Sprachmodell-Agenten, um eine optimale Bearbeitung registrierungserheblicher Mängel zu gewährleisten. Anstelle statischer Anweisungen wird hierbei ein flexibles System und/oder ein flexibler Algorithmus verwendet, das/der auf Basis der vorliegenden Problemstellung geeignete Parameter anpasst und/oder gegebenenfalls kontextbezogene Informationen hinzuzieht. Dieses Konzept kann auch als "intelligente Modellinteraktion", "situationsbezogene Eingabesteuerung" oder "selbstanpassendes Modellprompting" bezeichnet werden. Das automatische, adaptive Prompten wird vorzugsweise direkt im Softwarecode durch dynamische Generierung und Anpassung der Eingabeaufforderungen umgesetzt, sodass die Verarbeitung kennzeichnungsbezogener Informationen ohne direkte Nutzerinteraktion erfolgen kann. Hierzu werden die Prompts vorzugsweise auf Basis der spezifischen Art der Kennzeichnung, etwa Marke, Design und/oder eine andere Schutzrechtsform, generiert und entsprechend optimiert. Zusätzlich können die Prompts vorzugsweise durch kontextbezogene Parameter beeinflusst werden, indem beispielsweise der aktuelle Registrierungsstatus, bisherige Prüfungsergebnisse oder bekannte rechtliche Vorgaben automatisch in die Modellinteraktion einfließen. Ferner können die Prompts vorzugsweise an den registerrechtlichen Mangel individuelle angepasst werden, um diesen bestmöglich zu adressieren. Die Anpassung erfolgt vorzugsweise durch Integration von Domänenwissen, das als regelbasierte oder maschinell gelernte Wissensbasis hinterlegt ist, sodass bereits existierende Richtlinien oder Fallbeispiele in die Generierung der Prompts einbezogen werden. Zur Laufzeit werden die Prompts vorzugsweise in Echtzeit modifiziert, um auf Veränderungen in den Statusinformationen oder registrierungserheblichen Mängeln zu reagieren, sodass der zweite Sprachmodell-Agent situativ präzisere Anweisungen erhält. Dies geschieht vorzugsweise durch Softwaremodule, die semantische Ähnlichkeitsanalysen oder regelbasierte Anreicherung der Prompts durchführen, um die Effizienz der Mängelbehebung zu maximieren. Indem die Anpassungen vorzugsweise ohne manuelle Eingriffe erfolgen, wird sichergestellt, dass der Registrierungsprozess hochautomatisiert und konsistent bleibt.

Domänenwissen umfasst vorzugsweise spezifische Fachkenntnisse und Regelwerke, die für die Bearbeitung von Kennzeichnungsanmeldungen erforderlich sind. Dies kann Informationen über markenrechtliche Vorschriften, Verfahrensrichtlinien und/oder Entscheidungsgrundlagen umfassen, die in strukturierter Form in einer Wissensbasis vorliegen. Der zweite Sprachmodell-Agent nutzt dieses Wissen, um Mängel korrekt zu identifizieren und Bearbeitungsvorschläge abzuleiten. Alternativ kann dieser Begriff als "fachspezifische Wissensbasis", "regelbasierte Entscheidungsgrundlage" oder "registrierungsbezogenes Expertenwissen" bezeichnet werden.

Den Mangel adressieren bedeutet vorzugsweise, dass der zweite Sprachmodell-Agent eine geeignete Strategie zur Behebung des registrierungserheblichen Mangels entwickelt und diese Information zur Anpassung der Anmeldung an den ersten Sprachmodell-Agenten zurückgibt. Dies kann durch Umformulierung von Beschreibungen, Hinzufügen notwendiger Nachweise oder Anpassung der Klassifizierung erfolgen. Alternativ könnte dieser Vorgang als "automatisierte Korrektur registrierungsrelevanter Beanstandungen", "softwaregestützte Mängelbehebung" oder "intelligente Fehlerbehandlung im Anmeldeprozess" bezeichnet werden.

Das vorgeschlagene Verfahren bietet eine Reihe technischer Vorteile, die insbesondere die Effizienz, Genauigkeit und/oder Skalierbarkeit des Registrierungsprozesses für Kennzeichnungen verbessern. Durch die Automatisierung der Registrierung und der Bearbeitung registrierungserheblicher Mängel wird der gesamte Anmeldeprozess erheblich beschleunigt, wodurch sowohl die Bearbeitungszeiten auf Seiten der anmeldenden Person als auch auf Seiten der zuständigen Registrierungsstellen reduziert werden. Gleichzeitig wird durch die Nutzung eines maschinellen Lernmodells die Konsistenz der Anträge verbessert, indem systematische Fehler vermieden und eine einheitliche Qualitätskontrolle sichergestellt wird. Ferner reduziert die automatisierte Mängelbehebung den manuellen Arbeitsaufwand erheblich und ermöglicht eine datengetriebene Optimierung des Registrierungsprozesses. Ein weiterer technischer Vorteil liegt in der Möglichkeit, den Prozess in einer verteilten Cloud-Umgebung oder auf leistungsstarken Servern zu betreiben, wodurch eine skalierbare und ressourceneffiziente Verarbeitung auch für große Mengen an Anträgen gewährleistet wird.

Ein konkretes Beispiel aus dem Bereich der Markenanmeldung könnte die Registrierung einer neuen Wortmarke sein, bei der der Antragsteller den Namen eines Produkts oder Unternehmens schützen möchte. Während der Registrierung stellt der erste Sprachmodell-Agent sicher, dass alle erforderlichen Informationen, wie Waren- und Dienstleistungsklassen, korrekt angegeben wurden. Falls während der Prüfung festgestellt wird, dass die Marke mit einer bestehenden Marke verwechslungsfähig sein könnte, analysiert der zweite Sprachmodell-Agent den Mangel, sucht in einer domänenspezifischen Wissensbasis nach vergleichbaren Fällen und schlägt eine Argumentationsstrategie und/oder alternative Formulierungen und/oder Änderungen an der Markenbeschreibung und/oder dem Waren- und Dienstleistungsverzeichnis vor. Dieser automatisierte Prozess vermeidet lange Verzögerungen durch manuelle Nachbearbeitung und stellt sicher, dass die Marke schnellstmöglich eingetragen werden kann.

Ein Beispiel aus dem Bereich der Designanmeldung wäre die Registrierung eines neuen industriellen Designs, beispielsweise für eine innovative Smartphone-Hülle. Der Antragsteller reicht eine bildliche Darstellung des Designs ein, die der erste Sprachmodell-Agent verarbeitet und mit den formalen Anforderungen der zuständigen Behörde abgleicht. Falls das Design unzureichend beschrieben ist oder eine inkorrekte Klassifikation verwendet wurde, und dies durch die Registrierungsstelle bemängelt wird, erkennt und analysiert der zweite Sprachmodell-Agent diesen Mangel und schlägt auf Basis gespeicherter Designrichtlinien und sonstiger Informationen vorzugsweise eine Gegenargumentation und/oder eine optimierte Beschreibung und/oder eine andere Klassifizierung vor. Dadurch wird sichergestellt, dass der Antrag korrekt eingereicht wird und nicht aufgrund formaler Mängel abgelehnt wird.

Neben Marken- und Designanmeldungen kann das Verfahren auch für die Registrierung weiterer Kennzeichnungen eingesetzt werden. Dazu gehören beispielsweise geographische Herkunftsangaben, die bestimmte Produkte aus einer bestimmten Region schützen, Firmennamen, die als geschäftliche Kennzeichen registriert werden, und/oder Klangmarken, die durch Audiodateien dargestellt werden. Ebenso könnten dreidimensionale Marken, die besondere Formen oder Verpackungen schützen, sowie Farbmarken, die spezifische Farbtöne für bestimmte Waren oder Dienstleistungen beanspruchen, durch das Verfahren effizienter registriert werden.

Software- und hardwareseitig können die beiden Sprachmodell-Agenten auf verschiedene Weise implementiert sein. Sie können als Softwaremodule auf dedizierter Hardware ausgeführt werden, beispielsweise auf spezialisierten Servern mit hoher Rechenkapazität. Alternativ können sie in einer verteilten Cloud-Umgebung betrieben werden, sodass die Verarbeitung dynamisch skaliert werden kann. Eine weitere Möglichkeit besteht darin, die Agenten auf einem lokalen Server oder in einem Rechenzentrum zu hosten, insbesondere für Organisationen, die Wert auf Datensicherheit und direkte Kontrolle über die Prozesse legen.

Darüber hinaus ist es möglich, dass die Sprachmodell-Agenten nicht als separate Systeme implementiert sind, sondern ein gemeinsames Modell bilden, das verschiedene Teilmodelle umfasst. In diesem Fall würde der erste Sprachmodell-Agent als Teilmodell für die Registrierung und Verwaltung von Anträgen fungieren, während der zweite Sprachmodell-Agent als Teilmodell für die Behebung von Mängeln innerhalb desselben übergeordneten Modells integriert wäre. Diese Architektur könnte als Expertenmodell ausgebildet sein, das mehrere spezialisierte Teilmodelle umfasst und somit eine noch effizientere Bearbeitung von Anträgen ermöglicht. Dieses Expertenmodell könnte sowohl domänenspezifisches Wissen und/oder auch adaptive Lernstrategien aufweisen, um die Qualität der automatisierten Registrierung weiter zu verbessern.

Das Verfahren kann vorzugsweise auch darauf gelesen werden, dass ein Widerspruch von einem Dritten gegen eine bereits registrierte Kennzeichnung eingelegt wird und dieser Widerspruch durch die Sprachmodell-Agenten verarbeitet wird. In diesem Fall werden vorzugsweise die widerspruchsbezogenen Informationen als kennzeichnungsbezogene Informationen bereitgestellt und an den ersten Sprachmodell-Agenten übergeben, der die Verwaltung des Widerspruchs in einer Datenbank initiiert bzw. durchführt und den weiteren Fortgang überwacht. Der erste Sprachmodell-Agent überwacht vorzugsweise den Widerspruchsfortschritt, indem er Statusinformationen von der zuständigen Behörde oder von weiteren beteiligten Parteien abfragt. Falls die Statusinformationen darauf hinweisen, dass der Widerspruch eine registrierungserhebliche Relevanz hat, wird der zweite Sprachmodell-Agent hinzugezogen, der den Widerspruch unter Verwendung von automatischem, adaptiven Prompten und/oder Domänenwissen analysiert und geeignete Reaktionsstrategien generiert. Diese Reaktion kann vorzugsweise die Prüfung der Widerspruchsbegründung, die Analyse möglicher Verteidigungsstrategien und/oder die Generierung eines Gegenarguments umfassen. Nach Abschluss dieser Analyse übergibt der zweite Sprachmodell-Agent die verarbeiteten Informationen vorzugsweise an den ersten Sprachmodell-Agenten zurück, der die Erwiderung auf den Widerspruch zur weiteren Bearbeitung in der Datenbank registriert. Das Verfahren gewährleistet vorzugsweise eine automatisierte, effiziente und domänenspezifische Bearbeitung von Widerspruchsverfahren, ohne dass eine manuelle Eingabe durch den Nutzer erforderlich ist.

Das Verfahren kann vorzugsweise auch für die Registrierung von Patenten und/oder Gebrauchsmustern eingesetzt werden, indem die einzelnen Prozessschritte entsprechend an die spezifischen Anforderungen des Patentanmeldeverfahrens angepasst werden. In diesem Fall können die kennzeichnungsbezogenen Informationen vorzugsweise technische Beschreibungen, Patentansprüche, Zeichnungen sowie Anmelderdaten umfassen, die an den ersten Sprachmodell-Agenten übergeben werden. Der erste Sprachmodell-Agent kann vorzugsweise die formale Einreichung der Patentanmeldung in einer Datenbank durchführt, indem er prüft, ob alle erforderlichen Dokumente vorhanden sind und die Anmeldung den vorgegebenen formalen Anforderungen entspricht. Während des Registrierungsprozesses kann der erste Sprachmodell-Agent vorzugsweise den Fortschritt der Patentanmeldung überwachen, indem er regelmäßig Statusinformationen von der zuständigen Prüfbehörde abfragt und/oder aktive Statusanfragen an die Prüfbehörde stellt. Falls während der Prüfung registrierungserhebliche Mängel festgestellt werden, wie beispielsweise mangelnde Neuheit, fehlende erfinderische Tätigkeit oder unzureichende Offenbarung der Erfindung, werden diese vorzugsweise an den zweiten Sprachmodell-Agenten übergeben. Der zweite Sprachmodell-Agent kann den Mangel vorzugsweise unter Verwendung von automatischem, adaptivem Prompten und/oder Domänenwissen analysieren, indem er bestehende Patentdokumente, Rechtsvorschriften und/oder frühere Prüfungsentscheidungen aus einer Wissensbasis abruft. Die Mangelanalyse kann vorzugsweise darauf basieren, dass das Modell relevante Passagen aus bereits erteilten Patenten oder veröffentlichten Patentanmeldungen extrahiert und mit der vorliegenden Anmeldung vergleicht, um Argumentations- und/oder Anpassungsvorschläge zu generieren. Falls beispielsweise der Prüfbericht mangelnde erfinderische Tätigkeit bemängelt, kann der zweite Sprachmodell-Agent vorzugsweise alternative Argumentationsstrategien vorschlagen oder darauf hinweisen, welche Aspekte der Erfindung verstärkt herausgestellt werden sollten. Diese Vorschläge werden vorzugsweise an den ersten Sprachmodell-Agenten zurückgegeben, der die überarbeiteten Antragsdokumente erneut in die Datenbank überträgt. Für die Registrierung eines Gebrauchsmusters kann das Verfahren vorzugsweise ähnlich eingesetzt werden, wobei die Prüfungsanforderungen in der Regel weniger streng sind als bei Patentanmeldungen. Der erste Sprachmodell-Agent kann vorzugsweise insbesondere sicherstellen, dass die Gebrauchsmusteranmeldung alle notwendigen formalen Angaben umfasst, während der zweite Sprachmodell-Agent vorzugsweise auf bereits bestehende Gebrauchsmuster und/oder technische Beschreibungen aus ähnlichen Bereichen referenzieren kann, um eine optimale Eintragungsstrategie zu entwickeln. Durch diese Anpassung des Verfahrens kann die Automatisierung der Patent- und Gebrauchsmusteranmeldung vorzugsweise die Prüfungsdauer verkürzen, die Qualität der Anmeldungen verbessern und den Verwaltungsaufwand für Antragsteller und Behörden erheblich reduzieren.

In einem weiteren Aspekt wird vorgeschlagen, dass der zweite Sprachmodell-Agent zur Behebung des registrierungserheblichen Mangels eine vordefinierte Wissensbasis mit Domänenwissen abfragt, um anhand hinterlegter Richtlinien und/oder Vorgaben einen automatisierten Handlungsvorschlag zu erzeugen.

Der zweite Sprachmodell-Agent ist vorzugsweise so konzipiert, dass er bei der Behebung eines registrierungserheblichen Mangels auf eine vordefinierte Wissensbasis mit Domänenwissen zugreift. Diese Wissensbasis stellt vorzugsweise eine strukturierte Sammlung von Fachinformationen dar, die speziell für die Prüfung, Anpassung und Optimierung von Kennzeichnungsregistrierungen erstellt wurde. Sie kann gesetzliche Regelwerke, amtliche Richtlinien, historische Prüfbeschlüsse, juristische Kommentare, relevante Gerichtsurteile und/oder semantisch verknüpfte Wissensgraphen aufweisen, die die Einordnung und Bearbeitung registrierungsbezogener Sachverhalte erleichtern. Die Wissensbasis kann statisch, also in Form festgelegter Regeln und Referenzen, oder dynamisch, beispielsweise durch maschinell erlernte Entscheidungsmuster und Ontologien, aufgebaut sein.

Die Abfrage der Wissensbasis kann auf verschiedene Weise erfolgen. Der zweite Sprachmodell-Agent kann vorzugsweise eine regelbasierte Suche, eine semantische Ähnlichkeitsanalyse, eine Vektorrepräsentation von Textdaten und/oder eine natürliche Sprachverarbeitung (NLP) mit embeddings verwenden, um relevante Informationen aus der Wissensbasis abzurufen. Dabei kann die Abfrage durch Schlüsselbegriffe, rechtliche Klassifikationen, statistische Merkmale und/oder durch direkte Verweise auf ähnliche, bereits entschiedene Fälle erfolgen. Der Agent kann zudem auf externe Wissensquellen wie amtliche Datenbanken, juristische Fachdatenbanken oder branchenspezifische Regelwerke zugreifen, um seine Abfrage zu verfeinern.

Die Erzeugung des automatisierten Handlungsvorschlags erfolgt vorzugsweise durch eine Kombination aus regelbasierter Entscheidungslogik, probabilistischen Modellen und/oder generativen Sprachmodellen. Der zweite Sprachmodell-Agent analysiert vorzugsweise die aus der Wissensbasis gewonnenen Informationen und ermittelt, welche Korrekturen und/oder Ergänzungen erforderlich sind, um den registrierungserheblichen Mangel zu beheben. Dazu kann er Vorschläge zur Modifikation der Kennzeichnungsbeschreibung, zur Anpassung von Klassifizierungen, zur Ergänzung erforderlicher Nachweise und/oder zur formalen Umstrukturierung der Anmeldung generieren. Der zweite Sprachmodell-Agent kann vorzugsweise zudem vorgefertigte Textbausteine mit adaptiver Formulierung verwenden, die automatisch an den spezifischen Fall angepasst werden. Falls erforderlich, kann der zweite Sprachmodell-Agent vorzugsweise auch verschiedene Handlungsoptionen mit einer Bewertung ihrer Wahrscheinlichkeit für eine erfolgreiche Registrierung bereitstellen, um dem ersten Sprachmodell-Agenten eine fundierte Entscheidungsgrundlage zu bieten.

In einem weiteren Aspekt wird vorgeschlagen, dass der erste Sprachmodell-Agent das automatische, adaptive Prompten des zweiten Sprachmodell-Agenten überwacht und auf vorbestimmte Weise, insbesondere fortlaufend, aktualisierte Statusinformationen anfordert, um die Wirksamkeit der Mangelbehebung zu validieren.

Das Überwachen des automatischen, adaptiven Promptens bezieht sich vorzugsweise auf die kontinuierliche Kontrolle und/oder Anpassung der Eingabeaufforderungen, die der zweite Sprachmodell-Agent verwendet, um registrierungserhebliche Mängel zu analysieren und geeignete Handlungsvorschläge zu generieren. Dabei stellt der erste Sprachmodell-Agent vorzugsweise sicher, dass die durch das adaptive Prompting erzeugten Anfragen kohärent, zielgerichtet und/oder kontextuell angemessen sind. Dies kann vorzugsweise durch eine Echtzeitüberwachung der generierten Prompts erfolgen, wobei der erste Sprachmodell-Agent überprüft, ob die Eingaben des zweiten Sprachmodell-Agenten zu verwertbaren und/oder sachlich korrekten Ergebnissen führen.

Die Überprüfung des automatischen, adaptiven Promptens kann vorzugsweise durch mehrere Mechanismen erfolgen. Eine Möglichkeit besteht darin, dass der erste Sprachmodell-Agent regelmäßig die Qualität und Relevanz der vom zweiten Sprachmodell-Agenten erzeugten Antworten analysiert und mit bereits bekannten, domänenspezifischen Mustern vergleicht. Dies kann vorzugsweise durch semantische Ähnlichkeitsmessungen, Regelprüfungen und/oder Validierungsmechanismen erfolgen, die angeben, dass die ausgegebenen Antworten mit den Richtlinien und/oder Anforderungen der Registrierung übereinstimmen. Alternativ kann der erste Sprachmodell-Agent vorzugsweise eine Bewertungsfunktion implementieren, die das adaptive Prompting anhand von Metriken wie Präzision, Vollständigkeit und/oder regulatorischer Übereinstimmung bewertet und gegebenenfalls eine erneute Generierung der Prompts anstößt.

Dieser Schüler-Lehrer-Netzwerk-Ansatz kann vorzugsweise in das Verfahren integriert werden, indem der erste Sprachmodell-Agent als "Lehrer"-Modell agiert, das die generierten Antworten des "Schüler"-Modells, also des zweiten Sprachmodell-Agenten, überprüft und optimiert. In einem solchen System kann der Lehrer-Agent vorzugsweise anhand eines regulären Feedback-Mechanismus bewerten, ob das adaptive Prompting des Schüler-Agenten die erwarteten Ergebnisse liefert. Falls dies nicht der Fall ist, kann der Lehrer-Agent vorzugsweise gezielt Korrekturen vornehmen, indem er neue Prompts generiert oder die bestehenden Eingabeaufforderungen optimiert. Dies ermöglicht eine dynamische Verbesserung der Modellinteraktion, da der zweite Sprachmodell-Agent durch wiederholtes Lernen und Feedback von Fehlern oder Ungenauigkeiten profitieren kann.

Durch die Implementierung eines solchen Ansatzes wird vorzugsweise möglich, dass das adaptive Prompting nicht nur auf heuristischen oder vorab festgelegten Regeln basiert, sondern durch kontinuierliches Lernen an neue Anforderungen und spezifische Registrierungsfälle angepasst wird. Dies führt vorzugsweise zu einer höheren Effizienz und Genauigkeit bei der Behebung registrierungserheblicher Mängel, da der zweite Sprachmodell-Agent im Laufe der Zeit eine optimierte Strategie für die Mangelanalyse und -behebung entwickelt.

In einem weiteren Aspekt wird vorgeschlagen, dass die kennzeichnungsbezogenen Informationen vor dem Bereitstellen an den ersten Sprachmodell-Agenten durch eine Modell-Vorverarbeitungsschicht auf formale Vollständigkeit und/oder Konsistenz überprüft werden.

Die Modell-Vorverarbeitungsschicht für formale Vollständigkeit und/oder Konsistenz sorgt vorzugsweise dafür, dass die kennzeichnungsbezogenen Informationen vor der Weiterverarbeitung durch den ersten Sprachmodell-Agenten überprüft und gegebenenfalls bereinigt oder ergänzt werden. Diese Vorverarbeitungsschicht kann sicherstellen, dass erforderliche Informationen vorhanden sind, die Formatierung der Eingaben den Anforderungen der zuständigen Registrierungsbehörde entspricht und/oder keine inkonsistenten oder widersprüchlichen Daten enthalten sind.

Die technische Ausbildung der Modell-Vorverarbeitungsschicht kann auf verschiedene Weise erfolgen. Eine Möglichkeit ist die Implementierung eines regelbasierten Validierungsmoduls, das vordefinierte formale Anforderungen überprüft, wie etwa die Pflichtangaben einer Anmeldung oder das korrekte Datenformat. Alternativ kann die Vorverarbeitungsschicht als neuronales Modell oder hybrides System aus regelbasierten und lernenden Komponenten ausgebildet sein, um komplexere Überprüfungen vorzunehmen, wie etwa semantische Konsistenzprüfungen oder eine kontextuelle Analyse der bereitgestellten Informationen. Ferner kann die Vorverarbeitung in einem mehrstufigen Prozess erfolgen, bei dem zunächst einfache, formale Prüfungen (z. B. Pflichtfeldüberprüfung) vorgenommen werden, bevor in einem zweiten Schritt weitergehende Plausibilitätsanalysen auf Basis von Machine-Learning-Methoden erfolgen.

Ein konkretes Beispiel aus dem Bereich der Markenanmeldung wäre eine Vorverarbeitungsschicht, die eine neu eingereichte Wortmarkenanmeldung überprüft, bevor diese an den ersten Sprachmodell-Agenten weitergegeben wird. Die Vorverarbeitung könnte hier sicherstellen, dass der Antragsteller eine vollständige Waren- und Dienstleistungsklassifikation gemäß der Nizza-Klassifikation angegeben hat, die Wortmarke keine unzulässigen Sonderzeichen umfasst und/oder die Angaben zur Inhaberschaft korrekt und vollständig sind. Zudem könnte eine Konsistenzprüfung erfolgen, indem der Anmeldewortlaut mit der angegebenen Klassifikation abgeglichen wird, um zu verhindern, dass eine Dienstleistung in einer Klasse beansprucht wird, die sachlich nicht passend ist. Falls Unstimmigkeiten erkannt werden, könnte die Modell-Vorverarbeitungsschicht automatische Korrekturvorschläge generieren oder eine Rückmeldung erzeugen, bevor die Daten an den ersten Sprachmodell-Agenten übergeben werden.

In einem weiteren Aspekt wird vorgeschlagen, dass bei einem erneuten registrierungserheblichen Mangel innerhalb des Registrierungsfortschritts dieselben Schritte gemäß Anspruch 1 wiederholt und die Statusinformationen jeweils erneut an den zweiten Sprachmodell-Agenten übergeben werden, insbesondere, bis der registrierungserhebliche Mangel behoben ist.

Ein erneuter registrierungserheblicher Mangel insbesondere liegt vor, wenn nach einer ersten Überprüfung und einer Korrekturmaßnahme durch den zweiten Sprachmodell-Agenten weiterhin ein Mangel in der Anmeldung der Kennzeichnung besteht oder ein neuer Mangel festgestellt wird. Dies kann beispielsweise durch eine weitere Rückmeldung der zuständigen Registrierungsbehörde oder durch eine erneute Überprüfung durch den ersten Sprachmodell-Agenten erkannt werden. Ein erneuter registrierungserheblicher Mangel kann entweder eine unzureichende Behebung eines bereits identifizierten Problems oder eine zusätzliche Beanstandung sein, die im ersten Bearbeitungsschritt nicht erfasst wurde.

Das Wiederholen der Schritte gemäß Anspruch 1 bedeutet, dass der Prozess der Mangelanalyse und -behebung erneut durchlaufen wird, um die fortbestehenden oder neuen registrierungserheblichen Mängel zu adressieren. Konkret werden die Statusinformationen des aktuellen Prüfstands erneut an den zweiten Sprachmodell-Agenten übergeben, der, insbesondere unter Verwendung von automatischem, adaptivem Prompten und/oder Domänenwissen, eine erneute Korrekturstrategie entwickelt. Anschließend wird das Ergebnis der Korrektur wieder an den ersten Sprachmodell-Agenten übergeben, der die überarbeiteten kennzeichnungsbezogenen Informationen erneut überprüft und gegebenenfalls eine weitere Statusaktualisierung in der Datenbank vornimmt. Diese iterativen Schleife kann fortgesetzt werden, bis der Mangel vollständig behoben ist und die Anmeldung die Anforderungen der Registrierungsbehörde erfüllt.

Ein Beispiel aus dem Bereich der Markenanmeldung wäre die Einreichung einer Wortmarke, die zunächst von der Registrierungsbehörde aufgrund fehlender Unterscheidungskraft beanstandet wurde. Der zweite Sprachmodell-Agent könnte daraufhin eine Überarbeitung der Markenbeschreibung vorschlagen, indem er beispielsweise eine erläuternde Beschreibung der Waren und Dienstleistungen hinzufügt, um die markenrechtliche Schutzfähigkeit zu erhöhen. Falls die Behörde die überarbeitete Anmeldung weiterhin als mangelhaft ansieht, weil die vorgeschlagene Änderung nicht ausreicht, um die Unterscheidungskraft zu belegen, wird dieser erneute registrierungserhebliche Mangel erfasst und die Schritte erneut durchlaufen. Der zweite Sprachmodell-Agent könnte dann anhand von Domänenwissen alternative Argumentationsstrategien vorschlagen, wie etwa die Bezugnahme auf vergleichbare, bereits eingetragene Marken oder eine weitere Präzisierung der Markennutzung. Dieser iterative Prozess setzt sich fort, bis die Eintragungsvoraussetzungen erfüllt sind oder der Antrag endgültig abgelehnt wird.

In einem weiteren Aspekt wird vorgeschlagen, dass der erste Sprachmodell-Agent und der zweite Sprachmodell-Agent in einer verteilten Cloud-Umgebung operieren.

Der erste Sprachmodell-Agent und der zweite Sprachmodell-Agent können vorzugsweise in einer verteilten Cloud-Umgebung operieren, um eine skalierbare und effiziente Verarbeitung großer Datenmengen zu ermöglichen. Die Cloud-Umgebung kann vorzugsweise eine verteilte Architektur aufweisen, bei der die Agenten auf mehreren Servern oder Recheneinheiten ausgeführt werden, sodass die Arbeitslast dynamisch verteilt werden kann. Vorzugsweise ermöglicht die verteilte Cloud-Infrastruktur eine parallele Verarbeitung, sodass mehrere Kennzeichnungsüberprüfungen gleichzeitig durchgeführt werden können, wodurch die Effizienz des Verfahrens erheblich gesteigert wird.

Die Cloud-Umgebung kann vorzugsweise sowohl öffentliche, private und/oder hybride Cloud-Strukturen nutzen, je nach Sicherheits- und Datenschutzanforderungen der jeweiligen Registrierungsstelle oder des anmeldenden Unternehmens. Vorzugsweise können die Sprachmodell-Agenten über eine containerisierte Architektur, beispielsweise durch den Einsatz von Docker oder Kubernetes, implementiert werden, um eine flexible Bereitstellung und Skalierbarkeit zu gewährleisten. Die Kommunikation zwischen dem ersten und dem zweiten Sprachmodell-Agenten kann vorzugsweise über API-Schnittstellen und/oder über ein Ereignisgesteuertes Messaging-System erfolgen, sodass eine optimale Interaktion und Datenweitergabe innerhalb der Cloud-Umgebung sichergestellt wird.

Die verteilte Cloud-Umgebung kann vorzugsweise Machine-Learning-spezifische Hardware, wie TPUs (Tensor Processing Units) oder GPUs (Graphics Processing Units), nutzen, um rechenintensive Modellinferenzvorgänge effizient durchzuführen. Ferner kann die Architektur vorzugsweise so ausgelegt sein, dass sie eine automatische Skalierung ermöglicht, wodurch sich die Anzahl der parallel ausgeführten Sprachmodell-Agenten je nach Bearbeitungsaufkommen dynamisch anpassen lässt.

Zusätzlich kann die Cloud-Umgebung vorzugsweise Mechanismen zur Redundanz und Fehlertoleranz enthalten, sodass der erste Sprachmodell-Agent und der zweite Sprachmodell-Agent auch bei Teilausfällen des Systems weiterhin operieren können. Vorzugsweise können die Sprachmodell-Agenten in einer Multi-Cloud-Umgebung ausgeführt werden, um eine Lastverteilung über verschiedene Cloud-Anbieter hinweg zu ermöglichen und die Systemverfügbarkeit zu maximieren.

In einem weiteren Aspekt wird vorgeschlagen, dass die Registrierung der Kennzeichnung erst dann als abgeschlossen gilt, wenn der zweite Sprachmodell-Agent die Beseitigung des registrierungserheblichen Mangels an den ersten Sprachmodell-Agenten meldet und der erste Sprachmodell-Agent eine Bestätigung über die erfolgreiche Registrierung in der Datenbank ausgibt.

Das Merkmal "die Registrierung der Kennzeichnung erst dann als abgeschlossen gilt" bedeutet, dass der gesamte Registrierungsprozess erst dann als erfolgreich beendet betrachtet wird, wenn alle erforderlichen Prüfungen und Korrekturen durch die Sprachmodell-Agenten abgeschlossen wurden. Dies stellt sicher, dass eine Kennzeichnung nicht vorzeitig als registriert markiert wird, solange noch registrierungserhebliche Mängel bestehen oder eine endgültige Validierung aussteht.

Das Merkmal "wenn der zweite Sprachmodell-Agent die Beseitigung des registrierungserheblichen Mangels an den ersten Sprachmodell-Agenten meldet" beschreibt den Prozess, bei dem der zweite Sprachmodell-Agent die Analyse und mögliche Korrekturmaßnahmen für einen registrierungserheblichen Mangel durchführt. Sobald dieser Agent festgestellt hat, dass alle erkannten Mängel durch geeignete Maßnahmen, wie die Anpassung der Beschreibung, die Ergänzung fehlender Dokumente oder die Klarstellung von Klassifikationen, behoben wurden, generiert er beispielsweise eine Abschlussmeldung. Diese Abschlussmeldung signalisiert beispielsweise dem ersten Sprachmodell-Agenten, dass keine weiteren offenen Beanstandungen mehr vorliegen und die Anmeldung nun in die abschließende Bearbeitungsphase übergehen kann.

Das Merkmal "und der erste Sprachmodell-Agent eine Bestätigung über die erfolgreiche Registrierung in der Datenbank ausgibt" bezeichnet den Schritt, in dem der erste Sprachmodell-Agent anhand der durch den zweiten Sprachmodell-Agenten übermittelten Bestätigung überprüft, ob alle Anforderungen an die Registrierung erfüllt wurden. Ist dies der Fall, wird eine endgültige Eintragung der Kennzeichnung in der Datenbank vorgenommen. Gleichzeitig kann der erste Sprachmodell-Agent eine offizielle Registrierungsbestätigung generieren und den neuen Status der Kennzeichnung in einer Behördendatenbank oder einem internen System dokumentieren. Diese Bestätigung kann als digitale Vermerkung innerhalb der Datenbank, als Benachrichtigung an den Antragsteller und/oder als offizielle Veröffentlichung der registrierten Kennzeichnung erfolgen.

Durch dieses mehrstufige Verfahren wird sichergestellt, dass eine Kennzeichnung erst dann als offiziell registriert gilt, wenn alle formalen und materiellen Prüfungen erfolgreich abgeschlossen wurden und keine offenen Beanstandungen mehr bestehen.

Ferner wird vorliegend auch ein Verfahren zum automatisierten Überprüfen einer Registrierung einer Kennzeichnung vorgeschlagen, das ausweist: Bereitstellen von kennzeichnungsbezogenen Informationen an einen ersten Sprachmodell-Agenten, der eine formale Überprüfung der Registrierung der Kennzeichnung in einer Datenbank vornimmt und darauf basierend Statusinformationen erzeugt; und wenn die Statusinformationen angeben, dass die Kennzeichnung die formale Überprüfung erfüllt, Überprüfen der Kennzeichnung im Hinblick auf einen registrierungserheblichen Mangel durch einen zweiten Sprachmodell-Agenten, der den (materiellen) Mangel der Kennzeichnung, insbesondere unter Verwendung von automatischem, adaptiven Prompten und/oder Domänenwissen, analysiert, und als eine Textausgabe an den ersten Sprachmodell-Agenten übergibt. Weiterhin ist auch eine entsprechend ausgestaltete Vorrichtung vorgeschlagen.

Dieses weiterhin bevorzugte Verfahren ermöglicht eine automatisierte Überprüfung einer Kennzeichnungsregistrierung, wie sie beispielsweise von einer amtlichen Prüfbehörde durchgeführt wird. Im Gegensatz zur automatisierten Anmeldung auf Seiten des Anmelders adressiert dieses Verfahren die Prozesse innerhalb der prüfenden Institution, beispielsweise eines Marken- oder Patentamts. Durch den Einsatz von Sprachmodell-Agenten wird der Überprüfungsprozess beschleunigt, standardisiert und effizienter gestaltet, indem sowohl die formale als auch die materielle Prüfung der Kennzeichnung automatisiert erfolgt.

Zunächst wird ein erster Sprachmodell-Agent mit den kennzeichnungsbezogenen Informationen versorgt, die beispielsweise aus der eingereichten Kennzeichen-Anmeldung stammen. Der erste Sprachmodell-Agent übernimmt vorzugsweise die formale Prüfung der Anmeldung, indem er kontrolliert, ob alle erforderlichen Angaben vorhanden, korrekt strukturiert und in Einklang mit den formalen Anforderungen der Registrierungsstelle sind. Hierbei kann der erste Sprachmodell-Agent vorzugsweise prüfen, ob die Waren- und Dienstleistungsklassen korrekt zugeordnet wurden, die erforderlichen Dokumente beigefügt sind und/oder ob die Anmeldung gegen formale Bestimmungen verstößt. Auf Grundlage dieser Analyse werden Statusinformationen erzeugt, die den aktuellen Stand der Anmeldung widerspiegeln.

Falls die Statusinformationen anzeigen, dass die formale Prüfung erfolgreich abgeschlossen wurde, erfolgt die materielle Prüfung der Kennzeichnung. Diese wird vorzugsweise durch einen zweiten Sprachmodell-Agenten durchgeführt, der speziell auf die Analyse inhaltlicher Aspekte trainiert ist. Der zweite Sprachmodell-Agent untersucht vorzugsweise die Kennzeichnung im Hinblick auf registrierungserhebliche Mängel, wie etwa die fehlende Unterscheidungskraft einer Marke, das Vorliegen absoluter Schutzhindernisse und/oder eine potenzielle Verwechslungsgefahr mit bereits eingetragenen Schutzrechten. Dazu verwendet der zweite Sprachmodell-Agent vorzugsweise automatisches, adaptives Prompten, wodurch die Analyse in Echtzeit optimiert wird, indem das Modell je nach Kontext und erkannten Mängeln gezielt spezifische Prüfparameter anpasst.

Um eine möglichst fundierte Bewertung der Kennzeichnung vorzunehmen, greift der zweite Sprachmodell-Agent vorzugsweise auf Domänenwissen zurück, das beispielsweise aus gesetzlichen Vorgaben, früheren Entscheidungen der Prüfbehörde und/oder aus Wissensbasen mit markenrechtlichen und designrechtlichen Präzedenzfällen besteht. Auch Webcrawling ist in diesem Umfeld vorstellbar. Dies ermöglicht eine einheitliche, konsistente und nachvollziehbare Entscheidung über potenzielle Mängel. Die Ergebnisse dieser Prüfung werden als Textausgabe an den ersten Sprachmodell-Agenten übermittelt, der die Informationen weiterverarbeitet und entweder zur Erteilung einer Registrierung oder zur Erstellung eines Prüfbescheids mit Beanstandungen verwendet.

Durch dieses Verfahren kann eine effizientere, transparente und weitgehend automatisierte behördliche Prüfung gewährleistet werden. Die Nutzung von maschinellen Lernmodellen reduziert den manuellen Arbeitsaufwand, sorgt für eine gleichbleibende Qualität der Prüfentscheidungen und ermöglicht eine schnellere Bearbeitung von Anträgen, insbesondere in Behörden mit hohem Antragsaufkommen. Gleichzeitig wird durch das adaptive Prompting und die Nutzung von Domänenwissen sichergestellt, dass die materielle Prüfung flexibel auf spezifische Fallkonstellationen reagieren kann, ohne auf starre Regeln angewiesen zu sein.

Die für das Verfahren zum automatisierten Registrieren einer Kennzeichnung gemachten Ausführungen gelten in entsprechender Weise für das Verfahren zum automatisierten Überprüfen einer Registrierung einer Kennzeichnung, und umgekehrt. Die Ausführungen zu den technischen Merkmalen und Begriffen gelten für alle hierin genannten Gegenstände und Verfahren gleichermaßen.

Das Verfahren kann vorzugsweise auch für die automatisierte Überprüfung von Patentanmeldungen und Gebrauchsmusteranmeldungen eingesetzt werden, indem die einzelnen Verfahrensschritte entsprechend auf die spezifischen Prüfungsanforderungen dieser Schutzrechte angepasst werden. Die kennzeichnungsbezogenen Informationen können vorzugsweise die vollständige Patentanmeldung oder Gebrauchsmusteranmeldung umfassen, einschließlich technischer Beschreibung, Patentansprüche, Zeichnungen und Klassifizierungsangaben. Der erste Sprachmodell-Agent kann vorzugsweise eine formale Überprüfung der Anmeldung durchführen, indem er prüft, ob alle erforderlichen Dokumente vollständig vorliegen, die formalen Anforderungen der zuständigen Behörde erfüllt sind und die Anmeldung korrekt klassifiziert wurde. Basierend auf dieser Analyse werden vorzugsweise Statusinformationen erzeugt, die den aktuellen Bearbeitungsstand der Anmeldung widerspiegeln.

Falls die Statusinformationen darauf hinweisen, dass die Anmeldung die formale Prüfung erfolgreich bestanden hat, erfolgt vorzugsweise eine inhaltliche Prüfung durch den zweiten Sprachmodell-Agenten, der mögliche registrierungserhebliche Mängel identifiziert. Dies kann insbesondere eine Analyse der Neuheit, erfinderischen Tätigkeit und industriellen Anwendbarkeit im Falle von Patentanmeldungen oder eine Prüfung der technischen Schutzfähigkeit im Fall von Gebrauchsmusteranmeldungen umfassen. Der zweite Sprachmodell-Agent kann vorzugsweise eine automatisierte Recherche nach relevanten Stand-der-Technik-Dokumenten durchführen und durch automatisches adaptives Prompten und Domänenwissen analysieren, ob die Anmeldung schutzfähig ist oder ob mögliche Einwände bestehen.

Falls ein registrierungserheblicher Mangel festgestellt wird, kann der zweite Sprachmodell-Agent vorzugsweise automatisch eine strukturiere Textausgabe erzeugen, die eine detaillierte Begründung des Mangels enthält und diesen an den ersten Sprachmodell-Agenten übergeben. Diese Textausgabe kann vorzugsweise als Grundlage für einen Prüfbescheid und/oder eine vorläufige Einschätzung der Schutzfähigkeit und/oder als Recherchenbericht genutzt werden. Der erste Sprachmodell-Agent kann diese Informationen vorzugsweise weiterverarbeiten und in einer Behördendatenbank speichern oder zur weiteren internen Bearbeitung weiterleiten.

Das Verfahren ermöglicht vorzugsweise eine signifikante Effizienzsteigerung bei der formalen und materiellen Prüfung von Patentanmeldungen und Gebrauchsmusteranmeldungen, indem wiederkehrende Prüfaufgaben automatisiert, die Konsistenz von Prüfbescheiden verbessert und Bearbeitungszeiten reduziert werden. Eine entsprechend ausgestaltete Vorrichtung kann vorzugsweise als Software-Modul oder als Teil einer verteilten Cloud-Architektur implementiert werden, die den Prüfprozess in Echtzeit unterstützt und eine skalierbare, automatisierte Bearbeitung großer Mengen an Anmeldungen ermöglicht.

In einem weiteren Aspekt des Verfahrens zum automatisierten Überprüfen einer Registrierung einer Kennzeichnung wird vorgeschlagen, dass der zweite Sprachmodell-Agent zur Erkennen des registrierungserheblichen Mangels eine vordefinierte Wissensbasis mit Domänenwissen abfragt, um anhand hinterlegter Richtlinien und/oder Vorgaben einen automatisierten Handlungsvorschlag zu erzeugen.

In einem weiteren Aspekt des Verfahrens zum automatisierten Überprüfen einer Registrierung einer Kennzeichnung wird vorgeschlagen, dass der erste Sprachmodell-Agent das automatische, adaptive Prompten des zweiten Sprachmodell-Agenten überwacht und auf vorbestimmte Weise, insbesondere fortlaufend, aktualisierte Statusinformationen anfordert, um die Wirksamkeit der Mangelanalyse und -behebung zu validieren.

In einem weiteren Aspekt des Verfahrens zum automatisierten Überprüfen einer Registrierung einer Kennzeichnung wird vorgeschlagen, dass die kennzeichnungsbezogenen Informationen vor dem Bereitstellen an den ersten Sprachmodell-Agenten durch eine Modell-Vorverarbeitungsschicht auf formale Vollständigkeit und/oder Konsistenz überprüft werden.

In einem weiteren Aspekt des Verfahrens zum automatisierten Überprüfen einer Registrierung einer Kennzeichnung wird vorgeschlagen, dass der erste Sprachmodell-Agent und der zweite Sprachmodell-Agent in einer verteilten Cloud-Umgebung operieren.

In einem weiteren Aspekt des Verfahrens zum automatisierten Überprüfen einer Registrierung einer Kennzeichnung wird vorgeschlagen, dass die Überprüfung der Kennzeichnung erst dann als abgeschlossen gilt, wenn der zweite Sprachmodell-Agent die abschließende Bewertung des registrierungserheblichen Mangels an den ersten Sprachmodell-Agenten übergibt und der erste Sprachmodell-Agent eine Bestätigung über die Überprüfung in der Datenbank ausgibt.

In einem weiteren Aspekt wird ein Computerprogrammprodukt vorgeschlagen, umfassend Befehle, die bei der Ausführung des Programms durch einen Computer diesen veranlassen, die Schritte des vorliegenden Verfahrens in einem seiner Aspekte auszuführen.

Das Computerprogrammprodukt umfasst vorzugsweise eine Sammlung von Anweisungen, die in einer oder mehreren Programmiersprachen geschrieben sind und die vorzugsweise darauf ausgelegt sind, die im Verfahren beschriebenen Aufgaben und/oder Funktionen zu erfüllen, wenn sie von einem Computer ausgeführt werden. Die Anweisungen im Programm sind vorzugsweise so gestaltet, dass sie den Computer veranlassen, die verschiedenen Schritte und Abläufe des Verfahrens gemäß den angegebenen Aspekten zu durchlaufen und durchzuführen.

In einem weiteren Aspekt wird ein computerlesbarer Datenträger vorgeschlagen, auf dem ein solches Computerprogrammprodukt gespeichert ist.

Dieser computerlesbare Datenträger kann verschiedene physische Medien umfassen, wie CDs, DVDs, USB-Sticks, Lochkarten, Festplatten oder Halbleiterspeicher, bspw. SSDs, die von Computern oder ähnlichen elektronischen Geräten gelesen werden können. Das auf dem Datenträger gespeicherte Computerprogrammprodukt umfasst vorzugsweise eine Sammlung von Anweisungen oder Code, die von einem Computer ausgeführt werden können, um spezifische Funktionen oder Aufgaben zu erfüllen. Das Programm kann in verschiedenen Programmiersprachen geschrieben sein und unterschiedliche Komponenten wie ausführbare Dateien, Bibliotheken, Konfigurationsdateien und Dokumentationen enthalten. Der Datenträger ermöglicht es vorzugsweise dem Computer, das darauf gespeicherte Programm zu lesen und auszuführen, um die vorgesehenen Funktionen zu realisieren.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.
- Fig. 1: zeigt eine schematische Ansicht eines Ausführungsbeispiels einer vorliegenden Vorrichtung.
- Fig. 2: zeigt ein schematisches Flussdiagramm eines Ausführungsbeispiels eines vorliegenden Verfahrens.

### Detaillierte Beschreibung der Zeichnungen

In den Figuren der Zeichnungen bezeichnen gleiche Bezugszeichen gleiche oder funktionsgleiche Elemente, Bauteile oder Komponenten, soweit nichts Gegenteiliges angegeben ist.

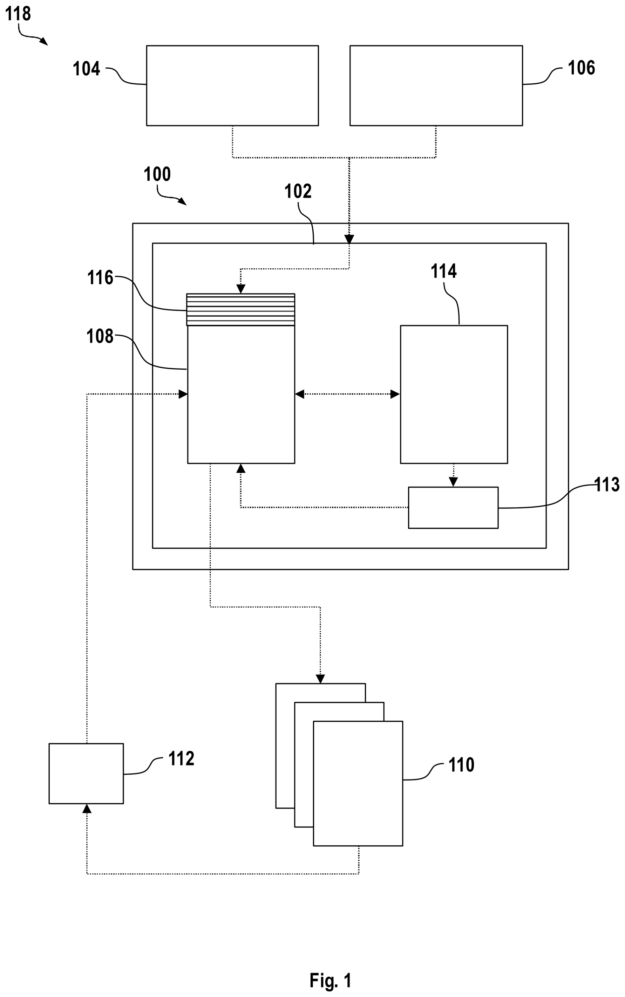

Fig. 1 zeigt eine schematische Darstellung einer Ausführungsform der vorliegenden Vorrichtung 100. Die Vorrichtung 100 weist eine Recheneinrichtung 102 auf. Ferner kann die Vorrichtung 100 eine Anzeigeeinrichtung und/oder eine Bereitstellungseinrichtung und/oder eine Speichereinrichtung und/oder eine Ausgabeeinrichtung und/oder eine Eingabeeinrichtung umfassen (nicht gezeigt). Es versteht sich, dass diese Einrichtungen gemeinsam mit der Recheneinrichtung 102 ausgebildet sein können, oder von dieser unterschiedlich sein können. Ferner kann die Vorrichtung 100 Teil eines nicht näher gezeigten Systems sein.

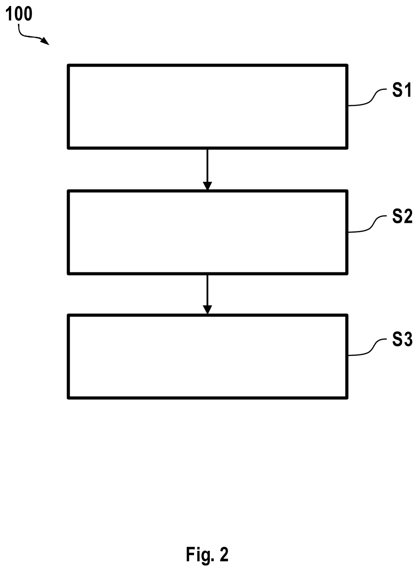

Fig. 2 zeigt ein schematisches Flussdiagramm eines Verfahrens zum automatisierten Registrieren einer Kennzeichnung 104, wobei das Verfahren durch die Vorrichtung 100 bzw. die Recheneinrichtung 102 ausführbar ist.

Das computerimplementierte Verfahren umfasst mindestens die folgenden Schritte:
In einem Schritt S1 erfolgt ein Bereitstellen von kennzeichnungsbezogenen Informationen 106 an einen ersten Sprachmodell-Agenten 108, der die Registrierung der Kennzeichnung 104 in einer Datenbank 110 durchführt.

In einem Schritt S2 erfolgt ein Überwachen eines Registrierungsfortschritts der Kennzeichnung 104 durch den ersten Sprachmodell-Agenten 108 durch Abfragen von Statusinformationen 112.

In einem Schritt S3 erfolgt ein Bereitstellen der Statusinformationen 112 an einen zweiten Sprachmodell-Agenten 114, der den Mangel, insbesondere unter Verwendung von automatischem, adaptiven Prompten und/oder Domänenwissen, adressiert, indem eine Ausgabe 113 erzeugt wird, die an den ersten Sprachmodell-Agenten 108 zum Registrieren der Kennzeichnung 104 in der Datenbank 110 übergeben wird, wenn die Statusinformationen 112 angeben, dass die Kennzeichnung 104 einen registrierungserheblichen Mangel aufweist. Die Ausgabe 113 ist vorzugsweise eine textuelle Erwiderung auf den registrierungserheblichen Mangel, durch den der Mangel durch Anpassung und/oder durch Gegenargumentation unter Verwendung der Kennzeichnung 104 und/oder der kennzeichnungsbezogenen Informationen adressiert wird.

Zur Behebung eines registrierungserheblichen Mangels greift der zweite Sprachmodell-Agent 114 vorzugsweise auf eine vordefinierte Wissensbasis mit Domänenwissen zurück, um anhand hinterlegter Richtlinien und/oder Vorgaben einen automatisierten Handlungsvorschlag zu erzeugen. Der erste Sprachmodell-Agent 108 überwacht das automatische, adaptive Prompten des zweiten Sprachmodell-Agenten 114 vorzugsweise und fordert auf vorbestimmte Weise, insbesondere fortlaufend, aktualisierte Statusinformationen 112 an, um die Wirksamkeit der Mangelbehebung zu validieren und/oder zu überprüfen. Die kennzeichnungsbezogenen Informationen 106 werden dabei vorzugsweise vor dem Bereitstellen in Schritt S1 an den ersten Sprachmodell-Agenten 108 durch eine Modell-Vorverarbeitungsschicht 116 auf formale Vollständigkeit und/oder Konsistenz überprüft.

Sollte innerhalb des Registrierungsfortschritts erneut ein registrierungserheblicher Mangel auftreten, wird derselbe Ablauf gemäß den beschriebenen Schritten wiederholt und die Statusinformationen 112 erneut an den zweiten Sprachmodell-Agenten 114 übergeben, solange, bis der registrierungserhebliche Mangel behoben ist.

Der erste Sprachmodell-Agent 108 und der zweite Sprachmodell-Agent 114 operieren Modell-Vorverarbeitungsschicht in einer verteilten Cloud-Umgebung 118, was die Verarbeitung großer Datenvolumina ermöglicht.

Die Registrierung der Kennzeichnung 104 gilt erst dann als abgeschlossen, wenn der zweite Sprachmodell-Agent 114 die Beseitigung aller registrierungserheblichen Mängel an den ersten Sprachmodell-Agenten 108 meldet und dieser schließlich eine Bestätigung über die erfolgreiche Registrierung in der Datenbank 110 ausgibt.

Die Fig. 1 und 2 können auch auf das folgende Verfahren entsprechend gelesen werden, nämlich auf ein Verfahren zum automatisierten Überprüfen einer Registrierung einer Kennzeichnung 104, das ausweist: Bereitstellen von kennzeichnungsbezogenen Informationen an einen ersten Sprachmodell-Agenten 108, der eine formale Überprüfung der Registrierung der Kennzeichnung 104 in einer Datenbank 110 vornimmt und darauf basierend Statusinformationen 112 erzeugt; und wenn die Statusinformationen 112 angeben, dass die Kennzeichnung 104 die formale Überprüfung erfüllt, Überprüfen der Kennzeichnung 104 im Hinblick auf einen, insbesondere materiellen, registrierungserheblichen Mangel durch einen zweiten Sprachmodell-Agenten 114, der den registrierungserheblichen Mangel der Kennzeichnung, insbesondere unter Verwendung von automatischem, adaptiven Prompten und/oder Domänenwissen, analysiert, und als eine Textausgabe (Ausgabe 113) an den ersten Sprachmodell-Agenten 108 übergibt.

### Bezugszeichenliste

- 100: Vorrichtung
- 102: Recheneinrichtung
- 104: Kennzeichnung
- 106: kennzeichnungsbezogene Informationen
- 108: erster Sprachmodell-Agent
- 110: Datenbank
- 112: Statusinformationen
- 113: Ausgabe
- 114: zweiter Sprachmodell-Agent
- 116: Modell-Vorverarbeitungsschicht
- 118: Cloud-Umgebung

- S1: Verfahrensschritt
- S2: Verfahrensschritt
- S3: Verfahrensschritt

## Patentansprüche

1. Verfahren zum automatisierten Registrieren einer Kennzeichnung (104), ausweisend:
- Bereitstellen (S1) von kennzeichnungsbezogenen Informationen (106) an einen ersten Sprachmodell-Agenten (108), der die Registrierung der Kennzeichnung (104) in einer Datenbank (110) durchführt;
- Überwachen (S2) eines Registrierungsfortschritts der Kennzeichnung (104) durch den ersten Sprachmodell-Agenten (108) durch Abfragen von Statusinformationen (112); und
- wenn die Statusinformationen (112) angeben, dass die Kennzeichnung (104) einen registrierungserheblichen Mangel aufweist,
- Bereitstellen (S3) der Statusinformationen (112) an einen zweiten Sprachmodell-Agenten (114), der den Mangel, insbesondere unter Verwendung von automatischem, adaptiven Prompten und/oder Domänenwissen, adressiert, und an den ersten Sprachmodell-Agenten (108) zum Registrieren der Kennzeichnung (104) in der Datenbank (110) übergibt.

2. Verfahren nach Anspruch 1, wobei der zweite Sprachmodell-Agent (114) zur Behebung des registrierungserheblichen Mangels eine vordefinierte Wissensbasis mit Domänenwissen abfragt, um anhand hinterlegter Richtlinien und/oder Vorgaben einen automatisierten Handlungsvorschlag zu erzeugen.

3. Verfahren nach Anspruch 1 oder 2, wobei das Verfahren das Übermitteln der Statusinformationen (112) und von dem zweiten Sprachmodell-Agenten (114) erzeugter Ausgaben (113) über eine message-orientierte Middleware umfasst, wobei die Middleware zur Speicherung, Priorisierung und warteschlangenbasierten Weiterleitung der Nachrichten ausgebildet ist, und wobei der zweite Sprachmodell-Agent (114) eine adaptive Prompt-Engine verwendet, deren Prompt-Parameter in Abhängigkeit einer Scoring-Funktion dynamisch angepasst werden, wobei die Scoring-Funktion mindestens eine Bewertung der syntaktischen Validität, der Datenbankschema-Kompatibilität und der Antwortlatenzen umfasst.

4. Verfahren nach einem der vorhergehenden Ansprüche, wobei das Verfahren einen tokenbasierten Deadlock-Vermeidungsmechanismus umfasst, bei dem der erste Sprachmodell-Agent (108) einen zeitstempelbasierten Zugriffstoken erzeugt, der dem zweiten Sprachmodell-Agenten (114) nur während einer Gültigkeitsdauer Schreibzugriff auf den betroffenen Datenbankeintrag erlaubt, sodass parallele Schreibkonflikte verhindert werden.

5. Verfahren nach einem der vorhergehenden Ansprüche, wobei der erste Sprachmodell-Agent (108) das automatische, adaptive Prompten des zweiten Sprachmodell-Agenten (114) überwacht und auf vorbestimmte Weise, insbesondere fortlaufend, aktualisierte Statusinformationen (112) anfordert, um die Wirksamkeit der Mangelbehebung zu validieren.

6. Verfahren nach einem der vorhergehenden Ansprüche, wobei die kennzeichnungsbezogenen Informationen (106) vor dem Bereitstellen (S1) an den ersten Sprachmodell-Agenten (108) durch eine Modell-Vorverarbeitungsschicht (116) auf formale Vollständigkeit und/oder Konsistenz überprüft werden.

7. Verfahren nach einem der vorhergehenden Ansprüche, wobei bei einem erneuten registrierungserheblichen Mangel innerhalb des Registrierungsfortschritts dieselben Schritte gemäß Anspruch 1 wiederholt und die Statusinformationen (112) jeweils erneut an den zweiten Sprachmodell-Agenten (114) übergeben werden, insbesondere, bis der registrierungserhebliche Mangel behoben ist.

8. Verfahren nach einem der vorhergehenden Ansprüche, wobei der erste Sprachmodell-Agent (108) und der zweite Sprachmodell-Agent (114) in einer verteilten Cloud-Umgebung (118) operieren.

9. Verfahren nach einem der vorhergehenden Ansprüche, wobei die Registrierung der Kennzeichnung (104) erst dann als abgeschlossen gilt, wenn der zweite Sprachmodell-Agent (114) die Beseitigung des registrierungserheblichen Mangels an den ersten Sprachmodell-Agenten (108) meldet und der erste Sprachmodell-Agent (108) eine Bestätigung über die erfolgreiche Registrierung in der Datenbank (110) ausgibt.

10. Verfahren zum automatisierten Überprüfen einer Registrierung einer Kennzeichnung (104), das ausweist: Bereitstellen von kennzeichnungsbezogenen Informationen an einen ersten Sprachmodell-Agenten (108), der eine formale Überprüfung der Registrierung der Kennzeichnung (104) in einer Datenbank (110) vornimmt und darauf basierend Statusinformationen (112) erzeugt; und wenn die Statusinformationen (112) angeben, dass die Kennzeichnung (104) die formale Überprüfung erfüllt, Überprüfen der Kennzeichnung (104) im Hinblick auf einen, insbesondere materiellen, registrierungserheblichen Mangel durch einen zweiten Sprachmodell-Agenten (114), der den registrierungserheblichen Mangel der Kennzeichnung, insbesondere unter Verwendung von automatischem, adaptiven Prompten und/oder Domänenwissen, analysiert, und als eine Textausgabe an den ersten Sprachmodell-Agenten (108) übergibt.

11. Computerprogrammprodukt, das auf einem computerlesbaren Medium gespeichert ist und Befehle umfasst, die, wenn sie auf einem Computer ausgeführt werden, diesen veranlassen, die Schritte eines Verfahrens nach einem der Ansprüche 1 bis 10 auszuführen.

12. Computerspeicherbares Medium, auf dem das Computerprogrammprodukt nach Anspruch 11 gespeichert ist.

13. Vorrichtung (100) zum automatisierten Registrieren einer Kennzeichnung (104), die Vorrichtung (100) ausweisend eine Recheneinrichtung (102), die dazu ausgebildet ist, die folgenden Schritte auszuführen:
- Bereitstellen von kennzeichnungsbezogenen Informationen (106) an einen ersten Sprachmodell-Agenten (108), der die Registrierung der Kennzeichnung (104) in einer Datenbank (110) durchführt;
- Überwachen eines Registrierungsfortschritts der Kennzeichnung (104) durch den ersten Sprachmodell-Agenten (108) durch Abfragen von Statusinformationen (112); und
- wenn die Statusinformationen (112) angeben, dass die Kennzeichnung (104) einen registrierungserheblichen Mangel aufweist,
- Bereitstellen der Statusinformationen (112) an einen zweiten Sprachmodell-Agenten (114), der den Mangel, insbesondere unter Verwendung von automatischem, adaptiven Prompten und/oder Domänenwissen, adressiert, und an den ersten Sprachmodell-Agenten (108) zum Registrieren der Kennzeichnung (104) in der Datenbank (110) übergibt.

14. Vorrichtung (100) zum automatisierten Überprüfen einer Registrierung einer Kennzeichnung (104), die Vorrichtung (100) ausweisend eine Recheneinrichtung (102), die dazu ausgebildet ist, die folgenden Schritte auszuführen: Bereitstellen von kennzeichnungsbezogenen Informationen an einen ersten Sprachmodell-Agenten (108), der eine formale Überprüfung der Registrierung der Kennzeichnung (104) in einer Datenbank (110) vornimmt und darauf basierend Statusinformationen (112) erzeugt; und wenn die Statusinformationen (112) angeben, dass die Kennzeichnung (104) die formale Überprüfung erfüllt, Überprüfen der Kennzeichnung (104) im Hinblick auf einen, insbesondere materiellen, registrierungserheblichen Mangel durch einen zweiten Sprachmodell-Agenten (114), der den registrierungserheblichen Mangel der Kennzeichnung, insbesondere unter Verwendung von automatischem, adaptiven Prompten und/oder Domänenwissen, analysiert, und als eine Textausgabe an den ersten Sprachmodell-Agenten (108) übergibt.

15. Vorrichtung nach einem der Ansprüche 11 oder 12, wobei die Vorrichtung (100) eine message-orientierte Middleware umfasst, die zur Speicherung, Priorisierung und warteschlangenbasierten Weiterleitung von zwischen dem ersten Sprachmodell-Agenten (108) und dem zweiten Sprachmodell-Agenten (114) ausgetauschten strukturierten Nachrichten ausgebildet ist, und wobei der zweite Sprachmodell-Agent (114) eine adaptive Prompt-Engine aufweist, deren Prompt-Parameter durch eine Scoring-Funktion angepasst werden, wobei die Scoring-Funktion mindestens syntaktische Validität, Datenbankschema-Kompatibilität und Antwortlatenzen bewertet.

## Geänderte Patentansprüche

### Geänderte Patentansprüche gemäss Regel 137(2) EPÜ.

1. Verfahren zum automatisierten Registrieren einer Kennzeichnung (104), ausweisend:
- Bereitstellen (S1) von kennzeichnungsbezogenen Informationen (106) an einen ersten Sprachmodell-Agenten (108), der die Registrierung der Kennzeichnung (104) in einer Datenbank (110) durchführt;
- Überwachen (S2) eines Registrierungsfortschritts der Kennzeichnung (104) durch den ersten Sprachmodell-Agenten (108) durch Abfragen von Statusinformationen (112); und
- wenn die Statusinformationen (112) angeben, dass die Kennzeichnung (104) einen registrierungserheblichen Mangel aufweist,
- Bereitstellen (S3) der Statusinformationen (112) an einen zweiten Sprachmodell-Agenten (114), der den Mangel, insbesondere unter Verwendung von automatischem, adaptiven Prompten und/oder Domänenwissen, adressiert, und an den ersten Sprachmodell-Agenten (108) zum Registrieren der Kennzeichnung (104) in der Datenbank (110) übergibt,
- wobei die Statusinformationen (112) und von dem zweiten Sprachmodell-Agenten (114) erzeugte Ausgaben (113) über eine message-orientierte Middleware übermittelt werden, wobei die Middleware zur Speicherung, Priorisierung und warteschlangenbasierten Weiterleitung der Nachrichten ausgebildet ist,
- wobei das Verfahren einen tokenbasierten Deadlock-Vermeidungsmechanismus umfasst, bei dem der erste Sprachmodell-Agent (108) einen zeitstempelbasierten Zugriffstoken erzeugt, der dem zweiten Sprachmodell-Agenten (114) nur während einer Gültigkeitsdauer Schreibzugriff ausschließlich auf einen durch die Statusinformationen (112) als mangelbehaftet identifizierten Datenbankeintrag erlaubt, sodass parallele Schreibkonflikte verhindert werden,
- wobei die von dem zweiten Sprachmodell-Agenten (114) erzeugten Ausgaben (113) vor einer Übernahme in die Datenbank (110) durch ein Validierungsmodul des ersten Sprachmodell-Agenten (108) validiert werden, wobei das Validierungsmodul wenigstens eine syntaktische Konsistenzprüfung, eine Datenbank-Schema-Kompatibilitätsprüfung und eine Prüfung von Latenzanforderungen durchführt, und
- wobei die Übernahme der von dem zweiten Sprachmodell-Agenten (114) erzeugten Ausgaben (113) in die Datenbank (110) nur bei gültigem Zugriffstoken und erfolgreicher Validierung als transaktionale Aktualisierung des mangelbehaftet identifizierten Datenbankeintrags mittels des Transaktionsmanagers erfolgt.

2. Verfahren nach Anspruch 1, wobei der zweite Sprachmodell-Agent (114) zur Behebung des registrierungserheblichen Mangels eine vordefinierte Wissensbasis mit Domänenwissen abfragt, um anhand hinterlegter Richtlinien und/oder Vorgaben einen automatisierten Handlungsvorschlag zu erzeugen.

3. Verfahren nach Anspruch 1 oder 2, wobei der zweite Sprachmodell-Agent (114) eine adaptive Prompt-Engine verwendet, deren Prompt-Parameter in Abhängigkeit einer Scoring-Funktion dynamisch angepasst werden, wobei die Scoring-Funktion mindestens eine Bewertung der syntaktischen Validität, der Datenbankschema-Kompatibilität und der Antwortlatenzen umfasst.

4. Verfahren nach einem der vorhergehenden Ansprüche, wobei der erste Sprachmodell-Agent (108) das automatische, adaptive Prompten des zweiten Sprachmodell-Agenten (114) überwacht und auf vorbestimmte Weise, insbesondere fortlaufend, aktualisierte Statusinformationen (112) anfordert, um die Wirksamkeit der Mangelbehebung zu validieren.

5. Verfahren nach einem der vorhergehenden Ansprüche, wobei die kennzeichnungsbezogenen Informationen (106) vor dem Bereitstellen (S1) an den ersten Sprachmodell-Agenten (108) durch eine Modell-Vorverarbeitungsschicht (116) auf formale Vollständigkeit und/oder Konsistenz überprüft werden.

6. Verfahren nach einem der vorhergehenden Ansprüche, wobei bei einem erneuten registrierungserheblichen Mangel innerhalb des Registrierungsfortschritts dieselben Schritte gemäß Anspruch 1 wiederholt und die Statusinformationen (112) jeweils erneut an den zweiten Sprachmodell-Agenten (114) übergeben werden, insbesondere, bis der registrierungserhebliche Mangel behoben ist.

7. Verfahren nach einem der vorhergehenden Ansprüche, wobei der erste Sprachmodell-Agent (108) und der zweite Sprachmodell-Agent (114) in einer verteilten Cloud-Umgebung (118) operieren.

8. Verfahren nach einem der vorhergehenden Ansprüche, wobei die Registrierung der Kennzeichnung (104) erst dann als abgeschlossen gilt, wenn der zweite Sprachmodell-Agent (114) die Beseitigung des registrierungserheblichen Mangels an den ersten Sprachmodell-Agenten (108) meldet und der erste Sprachmodell-Agent (108) eine Bestätigung über die erfolgreiche Registrierung in der Datenbank (110) ausgibt.

9. Verfahren zum automatisierten Überprüfen einer Registrierung einer Kennzeichnung (104), das ausweist: Bereitstellen von kennzeichnungsbezogenen Informationen an einen ersten Sprachmodell-Agenten (108), der eine formale Überprüfung der Registrierung der Kennzeichnung (104) in einer Datenbank (110) vornimmt und darauf basierend Statusinformationen (112) erzeugt; und wenn die Statusinformationen (112) angeben, dass die Kennzeichnung (104) die formale Überprüfung erfüllt, Überprüfen der Kennzeichnung (104) im Hinblick auf einen, insbesondere materiellen, registrierungserheblichen Mangel durch einen zweiten Sprachmodell-Agenten (114), der den registrierungserheblichen Mangel der Kennzeichnung, insbesondere unter Verwendung von automatischem, adaptiven Prompten und/oder Domänenwissen, analysiert, und als eine Textausgabe an den ersten Sprachmodell-Agenten (108) übergibt,
- wobei die Statusinformationen (112) und von dem zweiten Sprachmodell-Agenten (114) erzeugte Ausgaben (113) über eine message-orientierte Middleware übermittelt werden, wobei die Middleware zur Speicherung, Priorisierung und warteschlangenbasierten Weiterleitung der Nachrichten ausgebildet ist,
- wobei das Verfahren einen tokenbasierten Deadlock-Vermeidungsmechanismus umfasst, bei dem der erste Sprachmodell-Agent (108) einen zeitstempelbasierten Zugriffstoken erzeugt, der dem zweiten Sprachmodell-Agenten (114) nur während einer Gültigkeitsdauer Schreibzugriff ausschließlich auf einen durch die Statusinformationen (112) als mangelbehaftet identifizierten Datenbankeintrag erlaubt, sodass parallele Schreibkonflikte verhindert werden,
- wobei die von dem zweiten Sprachmodell-Agenten (114) erzeugten Ausgaben (113) vor einer Übernahme in die Datenbank (110) durch ein Validierungsmodul des ersten Sprachmodell-Agenten (108) validiert werden, wobei das Validierungsmodul wenigstens eine syntaktische Konsistenzprüfung, eine Datenbank-Schema-Kompatibilitätsprüfung und eine Prüfung von Latenzanforderungen durchführt, und wobei die Übernahme der von dem zweiten Sprachmodell-Agenten (114) erzeugten Ausgaben (113) in die Datenbank (110) nur bei gültigem Zugriffstoken und erfolgreicher Validierung als transaktionale Aktualisierung des mangelbehaftet identifizierten Datenbankeintrags mittels des Transaktionsmanagers erfolgt.

10. Computerprogrammprodukt, das auf einem computerlesbaren Medium gespeichert ist und Befehle umfasst, die, wenn sie auf einem Computer ausgeführt werden, diesen veranlassen, die Schritte eines Verfahrens nach einem der Ansprüche 1 bis 9 auszuführen.

11. Computerspeicherbares Medium, auf dem das Computerprogrammprodukt nach Anspruch 10 gespeichert ist.

12. Vorrichtung (100) zum automatisierten Registrieren einer Kennzeichnung (104), die Vorrichtung (100) ausweisend eine Recheneinrichtung (102), die dazu ausgebildet ist, die folgenden Schritte auszuführen:
- Bereitstellen von kennzeichnungsbezogenen Informationen (106) an einen ersten Sprachmodell-Agenten (108), der die Registrierung der Kennzeichnung (104) in einer Datenbank (110) durchführt;
- Überwachen eines Registrierungsfortschritts der Kennzeichnung (104) durch den ersten Sprachmodell-Agenten (108) durch Abfragen von Statusinformationen (112); und
- wenn die Statusinformationen (112) angeben, dass die Kennzeichnung (104) einen registrierungserheblichen Mangel aufweist,
- Bereitstellen der Statusinformationen (112) an einen zweiten Sprachmodell-Agenten (114), der den Mangel, insbesondere unter Verwendung von automatischem, adaptiven Prompten und/oder Domänenwissen, adressiert, und an den ersten Sprachmodell-Agenten (108) zum Registrieren der Kennzeichnung (104) in der Datenbank (110) übergibt,
- wobei die Statusinformationen (112) und von dem zweiten Sprachmodell-Agenten (114) erzeugte Ausgaben (113) über eine message-orientierte Middleware übermittelt werden, wobei die Middleware zur Speicherung, Priorisierung und warteschlangenbasierten Weiterleitung der Nachrichten ausgebildet ist,
- wobei das Verfahren einen tokenbasierten Deadlock-Vermeidungsmechanismus umfasst, bei dem der erste Sprachmodell-Agent (108) einen zeitstempelbasierten Zugriffstoken erzeugt, der dem zweiten Sprachmodell-Agenten (114) nur während einer Gültigkeitsdauer Schreibzugriff ausschließlich auf einen durch die Statusinformationen (112) als mangelbehaftet identifizierten Datenbankeintrag erlaubt, sodass parallele Schreibkonflikte verhindert werden,
- wobei die von dem zweiten Sprachmodell-Agenten (114) erzeugten Ausgaben (113) vor einer Übernahme in die Datenbank (110) durch ein Validierungsmodul des ersten Sprachmodell-Agenten (108) validiert werden, wobei das Validierungsmodul wenigstens eine syntaktische Konsistenzprüfung, eine Datenbank-Schema-Kompatibilitätsprüfung und eine Prüfung von Latenzanforderungen durchführt, und
- wobei die Übernahme der von dem zweiten Sprachmodell-Agenten (114) erzeugten Ausgaben (113) in die Datenbank (110) nur bei gültigem Zugriffstoken und erfolgreicher Validierung als transaktionale Aktualisierung des mangelbehaftet identifizierten Datenbankeintrags mittels des Transaktionsmanagers erfolgt.

13. Vorrichtung (100) zum automatisierten Überprüfen einer Registrierung einer Kennzeichnung (104), die Vorrichtung (100) ausweisend eine Recheneinrichtung (102), die dazu ausgebildet ist, die folgenden Schritte auszuführen: Bereitstellen von kennzeichnungsbezogenen Informationen an einen ersten Sprachmodell-Agenten (108), der eine formale Überprüfung der Registrierung der Kennzeichnung (104) in einer Datenbank (110) vornimmt und darauf basierend Statusinformationen (112) erzeugt; und wenn die Statusinformationen (112) angeben, dass die Kennzeichnung (104) die formale Überprüfung erfüllt, Überprüfen der Kennzeichnung (104) im Hinblick auf einen, insbesondere materiellen, registrierungserheblichen Mangel durch einen zweiten Sprachmodell-Agenten (114), der den registrierungserheblichen Mangel der Kennzeichnung, insbesondere unter Verwendung von automatischem, adaptiven Prompten und/oder Domänenwissen, analysiert, und als eine Textausgabe an den ersten Sprachmodell-Agenten (108) übergibt,
- wobei die Statusinformationen (112) und von dem zweiten Sprachmodell-Agenten (114) erzeugte Ausgaben (113) über eine message-orientierte Middleware übermittelt werden, wobei die Middleware zur Speicherung, Priorisierung und warteschlangenbasierten Weiterleitung der Nachrichten ausgebildet ist,
- wobei das Verfahren einen tokenbasierten Deadlock-Vermeidungsmechanismus umfasst, bei dem der erste Sprachmodell-Agent (108) einen zeitstempelbasierten Zugriffstoken erzeugt, der dem zweiten Sprachmodell-Agenten (114) nur während einer Gültigkeitsdauer Schreibzugriff ausschließlich auf einen durch die Statusinformationen (112) als mangelbehaftet identifizierten Datenbankeintrag erlaubt, sodass parallele Schreibkonflikte verhindert werden,
- wobei die von dem zweiten Sprachmodell-Agenten (114) erzeugten Ausgaben (113) vor einer Übernahme in die Datenbank (110) durch ein Validierungsmodul des ersten Sprachmodell-Agenten (108) validiert werden, wobei das Validierungsmodul wenigstens eine syntaktische Konsistenzprüfung, eine Datenbank-Schema-Kompatibilitätsprüfung und eine Prüfung von Latenzanforderungen durchführt, und wobei die Übernahme der von dem zweiten Sprachmodell-Agenten (114) erzeugten Ausgaben (113) in die Datenbank (110) nur bei gültigem Zugriffstoken und erfolgreicher Validierung als transaktionale Aktualisierung des mangelbehaftet identifizierten Datenbankeintrags mittels des Transaktionsmanagers erfolgt.

14. Vorrichtung nach einem der Ansprüche 11 oder 12, wobei der zweite Sprachmodell-Agent (114) eine adaptive Prompt-Engine aufweist, deren Prompt-Parameter durch eine Scoring-Funktion angepasst werden, wobei die Scoring-Funktion mindestens syntaktische Validität, Datenbankschema-Kompatibilität und Antwortlatenzen bewertet.
